# EUROPEAN PATENT SPECIFICATION

(11) **EP 4 135 155 B1**
(45) Date of publication and mention of the grant of the patent: **19.06.2024**
(21) Application number: 22190151.5
(22) Date of filing: 12.08.2022
(51) Int. Cl.: H02J 7/00

(54) **ENERGY STORAGE SYSTEM AND CONTROL METHOD THEREOF**
ENERGIESPEICHERSYSTEM UND STEUERUNGSVERFAHREN DAVON
SYSTÈME DE STOCKAGE D'ÉNERGIE ET SON PROCÉDÉ DE COMMANDE

(30) Priority: 13.08.2021 CN 202110929718
(43) Date of publication of application: 15.02.2023
(73) Proprietor: Huawei Digital Power Technologies Co., Ltd., Shenzhen, 518043 (CN)
(72) Inventor: LI, Lin, Shenzhen, 518129 (CN); GUO, Haibin, Shenzhen, 518129 (CN); ZHOU, He, Shenzhen, 518129 (CN)
(74) Representative: Thun, Clemens

(56) References cited:
- EP-A1- 1 942 568
- EP-B1- 3 507 883
- US-A1- 2009 066 291

## Description

### TECHNICAL FIELD

This application relates to the field of energy technologies, and in particular, to an energy storage system and a control method thereof.

### BACKGROUND

Due to fluctuation and uncertainty of energy-based power generation, a requirement of continuous power supply on a user side cannot be met. Therefore, an energy storage system needs to be added to store electric energy that is not used up. An existing energy system mainly includes an energy management system (energy manage system, EMS), a battery control unit (battery control unit, BCU), an energy storage rack, a direct current/direct current (direct current/direct current, DC/DC) converter, a direct current/alternating current (direct current/alternating current, DC/AC) converter, an energy-based power generation system, a power grid, and a load. The energy storage rack is mainly used for storing electric energy.

In a conventional technology, the energy storage rack is connected to a bus bar by using the DC/DC converter, and then the DC/AC converter is connected to the power grid or supplies power to the load, or the energy-based power generation system is connected to an alternating current side, and charges the energy storage rack by using the DC/AC converter and the DC/DC converter.

Generally, the energy storage rack includes a plurality of battery packs connected in series. During charging or discharging of battery packs, some battery packs have electricity but cannot be released, and some battery packs have little electricity but cannot be charged. As a result, power backup duration is short.
The document US 2009/0066291 A1 shows a distributed energy storage control system. Especially, the activation and deactivation of individual battery storage units and an according connection or disconnection is shown.
The document EP 1 942 568 A1 shows a charging circuit for charging serially connected batteries. Especially, a connection and disconnection of individual batteries is shown.

### SUMMARY

The present invention is defined by the independent claims. Further advantageous developments are shown by the dependent claims.

This application provides an energy storage system and a control method thereof. According to technical solutions of this application, the energy storage system can implement long power backup duration.

According to a first aspect, this application provides an energy storage system. The energy storage system includes N switch units and N battery packs connected in series. The N switch units are separately connected to two ends of the N battery packs in a one-to-one correspondence. N is an integer greater than 1. Each of the N switch units is configured to: when the energy storage system is in a charging state and remaining power of a battery pack correspondingly connected to each switch unit meets a first preset condition, and/or when the energy storage system is in a discharging state and the remaining power of the battery pack correspondingly connected to each switch unit meets a second preset condition, perform off processing on the battery pack correspondingly connected to each switch unit. The first preset condition includes being greater than or equal to a first preset power value. The off processing includes disconnecting a current path of the battery pack correspondingly connected to each switch unit and ensuring that a current path of the energy storage system is connected. The second preset condition includes being less than or equal to a second preset power value. The first preset power value is greater than the second preset power value.

In this aspect, in a process in which the energy storage system performs charging or discharging, a corresponding switch unit is controlled to perform off processing on a battery pack that is corresponding to the switch unit and that meets the first preset condition or a battery pack that is corresponding to the switch unit and that meets the second preset condition, and other battery packs continue to be charged or discharged. Finally, all the battery packs reach a same value. When the energy storage system performs charging or discharging again, because battery energy is the same, time for completing charging or discharging is basically the same. In this way, long power backup duration of the energy storage system can be implemented.

Further, after the battery pack meeting the first preset condition or the battery pack meeting the second preset condition is off, another battery pack in the energy storage system may still be charged or discharged at a maximum current without being affected by off of the battery pack. In this way, a problem that power is limited can be resolved.

With reference to the first aspect, in a first possible implementation, the energy storage system further includes N battery monitor units BMUs. The N BMUs, the N battery packs, and the N switch units are in a one-to-one correspondence with each other. Each of the N BMUs is configured to: monitor remaining power of a battery pack correspondingly connected to each BMU, and when the energy storage system is in a charging state and the remaining power of the battery pack correspondingly connected to each BMU meets the first preset condition, and/or when the energy storage system is in a discharging state and the remaining power of the battery pack correspondingly connected to each BMU meets the second preset condition, send a control signal to a switch unit correspondingly connected to each BMU. The control signal is used for controlling the switch unit correspondingly connected to each BMU to perform the off processing on the battery pack correspondingly connected to each BMU. Each switch unit is specifically configured to: receive the control signal sent by the BMU correspondingly connected to each switch unit, and perform, under control of the control signal, the off processing on the battery pack correspondingly connected to each switch unit.

In this implementation, the N BMUs are added to the energy storage system, and are separately in a one-to-one correspondence with the N battery packs and the N switch units. Each BMU monitors a status of the battery pack correspondingly connected to each BMU, so that data of the remaining power of the correspondingly connected battery pack that is obtained through monitoring is more accurate, and the correspondingly connected switch unit is also more accurately controlled.

With reference to the first possible implementation, in a second possible implementation, each of the N switch units includes a first switch and a second switch. Each of the N battery packs is connected in series to a first switch in a switch unit correspondingly connected to each battery pack, to obtain a sub-circuit corresponding to each battery pack. A second switch in the switch unit correspondingly connected to each battery pack is connected in parallel to the sub-circuit corresponding to each battery pack. Each BMU is separately connected to a first switch and a second switch in the switch unit correspondingly connected to each BMU. Each BMU is specifically configured to: when the energy storage system is in a charging state and the remaining power of the battery pack correspondingly connected to each BMU meets the first preset condition, and/or when the energy storage system is in a discharging state and the remaining power of the battery pack correspondingly connected to each BMU meets the second preset condition, send a first control signal to the first switch in the switch unit correspondingly connected to each BMU, and send a second control signal to the second switch in the switch unit correspondingly connected to each BMU. The first control signal is used for controlling a switch to be turned off. The second control signal is used for controlling a switch to be turned on. The first switch in each switch unit is configured to: receive the first control signal sent by the BMU correspondingly connected to each switch unit, and be turned off under control of the first control signal. The second switch in each switch unit is configured to: receive the second control signal sent by the BMU correspondingly connected to each switch unit, and be turned on under control of the second control signal.

In this implementation, the first control signal and the second control signal that are sent by the BMU correspondingly connected to each switch unit are received, and the first switch is controlled to be turned off and the second switch is controlled to be turned on, to perform off on the battery pack correspondingly connected to the BMU from the current path; or the first switch is controlled to be turned on and the second switch is controlled to be turned off, to switch the battery pack correspondingly connected to each switch unit to the current path.

With reference to the second possible implementation, in a third possible implementation, the energy storage system further includes a battery control unit BCU. The BCU is connected to each BMU. Each BMU is further configured to: send power indication information corresponding to each BMU to the BCU. The power indication information indicates the remaining power of the battery pack correspondingly connected to each BMU. The BCU is configured to: receive the power indication information sent by each BMU, and determine, based on the power indication information, whether the remaining power of the battery pack correspondingly connected to each BMU meets the first preset condition or the second preset condition, when the remaining power of the battery pack correspondingly connected to each BMU meets the first preset condition and the energy storage system is in a charging state, and/or when the remaining power of the battery pack correspondingly connected to each BMU meets the second preset condition and the energy storage system is in a discharging state, send control indication information to each BMU. The control indication information indicates the BMU to control the correspondingly connected switch unit to perform off processing on the correspondingly connected battery pack. Each BMU is specifically configured to: receive the control indication information sent by the BCU, and send, based on the control indication information, the first control signal to the first switch in the switch unit correspondingly connected to each BMU, and send the second control signal to the second switch in the switch unit correspondingly connected to each BMU.

In the energy storage system, the battery control unit BCU is added to perform data communication with each BMU, to more accurately control the energy storage system.

With reference to the third possible implementation, in a fourth possible implementation, the BCU is further configured to: determine, at a startup phase of the BCU, whether the energy storage system needs to perform charging, and when the energy storage system needs to perform charging, send the control indication information to a BMU correspondingly connected to a charge-disabled battery pack in the N battery packs. The charge-disabled battery pack includes a battery pack whose remaining power is greater than or equal to the first preset power value.

With reference to the third possible implementation, in a fifth possible implementation, the BCU is further configured to: determine, at a startup phase of the BCU, whether the energy storage system needs to perform discharging, and when the energy storage system needs to perform discharging, send the control indication information to a BMU correspondingly connected to a discharge-disabled battery pack in the N battery packs. The discharge-disabled battery pack includes a battery pack whose remaining power is less than or equal to the second preset power value.

With reference to the third possible implementation, in a sixth possible implementation, the BCU is further configured to: determine, at a startup phase of the BCU, whether the energy storage system needs to perform charging and whether the energy storage system needs to perform discharging, and when the energy storage system does not need to perform charging and does not need to perform discharging, determine whether a quantity S of operational battery packs in the N battery packs is greater than or equal to a minimum quantity M of battery packs required for running the energy storage system. The operational battery packs include battery packs other than a charge-disabled battery pack, a discharge-disabled battery pack, and a faulty battery pack in the energy storage system. The charge-disabled battery pack includes a battery pack whose remaining power is greater than or equal to the first preset power value. The discharge-disabled battery pack includes a battery pack whose remaining power is less than or equal to the second preset power value. The BCU is further configured to: when S is greater than or equal to M, send the control indication information to BMUs correspondingly connected to the charge-disabled battery pack and the discharge-disabled battery pack.

In this implementation, when the quantity of operational battery packs in the energy storage system is greater than or equal to the minimum quantity of battery packs required for running the energy storage system, the charge-disabled battery pack and the discharge-disabled battery pack in the energy storage system are off, so that after the system is started, a condition that the system can perform charging or discharging is met.

With reference to the sixth possible implementation, in a seventh possible implementation, the BCU is further configured to: when S is less than M, determine whether a sum of S and a quantity N1 of charge-disabled battery packs in the energy storage system is greater than or equal to M, and when the sum of S and N1 is greater than or equal to M, send the control indication information to the BMU correspondingly connected to the discharge-disabled battery pack.

With reference to the sixth possible implementation, in an eighth possible implementation, the BCU is further configured to: when S is less than M, determine whether a sum of S and a quantity N2 of discharge-disabled battery packs in the energy storage system is greater than or equal to M, and when the sum of S and N2 is greater than or equal to M, send the control indication information to the BMU correspondingly connected to the charge-disabled battery pack.

According to a second aspect, this application provides a control method for an energy storage system. The energy storage system includes a battery control unit BCU, N battery monitor units BMUs, N switch units, and N battery packs connected in series. The N BMUs, the N battery packs, and the N switch units are in a one-to-one correspondence with each other. N is an integer greater than 1. The control method includes: The BCU receives power indication information sent by each BMU; the BCU determines, based on the power indication information, whether remaining power of a battery pack correspondingly connected to each BMU meets a first preset condition or a second preset condition; when the remaining power of the battery pack correspondingly connected to each BMU meets the first preset condition and the energy storage system is in a charging state, and/or when the remaining power of the battery pack correspondingly connected to each BMU meets the second preset condition and the energy storage system is in a discharging state, the BCU sends control indication information to each BMU. The power indication information indicates the remaining power of the battery pack correspondingly connected to each BMU. The control indication information indicates the BMU to control a correspondingly connected switch unit to perform off processing on the correspondingly connected battery pack. The off processing includes disconnecting a current path of a battery pack correspondingly connected to each switch unit and ensuring that a current path of the energy storage system is connected.

In this aspect, the battery control unit BCU performs data communication with each BMU, to control the energy storage system more accurately. In a running process of the energy storage system, when the remaining power of the battery pack correspondingly connected to each BMU meets the first preset condition or the second preset condition, the BCU sends the control indication information to each correspondingly connected BMU. The control indication information indicates the BMU to control the correspondingly connected switch unit to perform off processing on the correspondingly connected battery pack, and other battery packs continue to be charged and discharged. Finally, all the battery packs reach a same value. Then, when the energy storage system performs charging or discharging again, energy of the battery packs is the same. In this way, long power backup duration of the energy storage system can be implemented.

With reference to the second aspect, in a first possible implementation, the method further includes: The BCU determines, at a startup phase of the BCU, whether the energy storage system needs to perform charging; and when the energy storage system needs to perform charging, the BCU sends the control indication information to a BMU correspondingly connected to a charge-disabled battery pack in the N battery packs. The charge-disabled battery pack includes a battery pack whose remaining power is greater than or equal to a first preset power value.

With reference to the second aspect, in a second possible implementation, the method further includes: The BCU determines, at a startup phase of the BCU, whether the energy storage system needs to perform discharging; and when the energy storage system needs to perform discharging, the BCU sends the control indication information to a BMU correspondingly connected to a discharge-disabled battery pack in the N battery packs. The discharge-disabled battery pack includes a battery pack whose remaining power is less than or equal to a second preset power value.

With reference to the second aspect, in a third possible implementation, the method further includes: The BCU determines, at a startup phase of the BCU, whether the energy storage system needs to perform charging and whether the energy storage system needs to perform discharging; when the energy storage system does not need to perform charging and does not need to perform discharging, the BCU determines whether a quantity S of operational battery packs in the N battery packs is greater than or equal to a minimum quantity M of battery packs required for running the energy storage system, where the operational battery packs include battery packs other than a charge-disabled battery pack, a discharge-disabled battery pack, and a faulty battery pack in the energy storage system; and the charge-disabled battery pack includes a battery pack whose remaining power is greater than or equal to the first preset power value, and the discharge-disabled battery pack includes a battery pack whose remaining power is less than or equal to the second preset power value; and when S is greater than or equal to M, the BCU sends the control indication information to BMUs correspondingly connected to the charge-disabled battery pack and the discharge-disabled battery pack.

With reference to the third possible implementation, in a fourth possible implementation, the method further includes: When S is less than M, the BCU determines whether a sum of S and a quantity N1 of charge-disabled battery packs in the energy storage system is greater than or equal to M; and when the sum of S and N1 is greater than or equal to M, the BCU sends the control indication information to the BMU correspondingly connected to the discharge-disabled battery pack.

With reference to the third possible implementation, in a fifth possible implementation, the method further includes: When S is less than M, the BCU determines whether a sum of S and a quantity N2 of discharge-disabled battery packs in the energy storage system is greater than or equal to M; and when the sum of S and N2 is greater than or equal to M, the BCU sends the control indication information to the BMU correspondingly connected to the charge-disabled battery pack.

According to a third aspect, this application provides a control method for an energy storage system. The energy storage system includes N battery monitor units BMUs, N switch units, and N battery packs connected in series. The N BMUs, the N battery packs, and the N switch units are in a one-to-one correspondence with each other. N is an integer greater than 1. The control method includes: Each of the N BMUs monitors remaining power of a battery pack correspondingly connected to each BMU; and when the energy storage system is in a charging state and the remaining power of the battery pack correspondingly connected to each BMU meets a first preset condition, and/or when the energy storage system is in a discharging state and the remaining power of the battery pack correspondingly connected to each BMU meets a second preset condition, each BMU sends a control signal to a switch unit correspondingly connected to each BMU. The control signal is used for controlling the switch unit correspondingly connected to each BMU to perform off processing on the battery pack correspondingly connected to each BMU. The off processing includes disconnecting a current path of a battery pack correspondingly connected to each switch unit and ensuring that a current path of the energy storage system is connected.

According to the control method, in a running process of the energy storage system, off processing is performed on a battery pack that meets the first preset condition or a battery pack that meets the second preset condition, and other battery packs continue to be charged or discharged. Finally, all the battery packs reach a same value. When the energy storage system performs charging or discharging again, because battery energy is the same, time for completing charging or discharging is basically the same. In this way, long power backup duration of the energy storage system can be implemented.

With reference to the third aspect, in a first possible implementation, each of the N switch units includes a first switch and a second switch. Each BMU is separately connected to a first switch and a second switch in the switch unit correspondingly connected to each BMU. Each of the N battery packs is connected in series to a first switch in the switch unit correspondingly connected to each battery pack, to obtain a sub-circuit corresponding to each battery pack. A second switch in the switch unit correspondingly connected to each battery pack is connected in parallel to the sub-circuit corresponding to each battery pack. That each BMU sends a control signal to a switch unit correspondingly connected to each BMU includes: when the energy storage system is in a charging state and the remaining power of the battery pack correspondingly connected to each BMU meets the first preset condition, and/or when the energy storage system is in a discharging state and the remaining power of the battery pack correspondingly connected to each BMU meets the second preset condition, sending a first control signal to the first switch in the switch unit correspondingly connected to each BMU, and sending a second control signal to the second switch in the switch unit correspondingly connected to each BMU. The first control signal is used for controlling a switch to be turned off. The second control signal is used for controlling a switch to be turned on.

With reference to the first possible implementation, in a second possible implementation, the energy storage system further includes a battery control unit BCU. The method further includes: Each BMU receives control indication information sent by the BCU. The control indication information indicates the BMU to control the correspondingly connected switch unit to perform off processing on the correspondingly connected battery pack. That each BMU sends a first control signal to the first switch in the switch unit correspondingly connected to each BMU, and sends a second control signal to the second switch in the switch unit correspondingly connected to each BMU includes: Each BMU sends, based on the control indication information, the first control signal to the first switch in the switch unit correspondingly connected to each BMU, and sends the second control signal to the second switch in the switch unit correspondingly connected to each BMU.

According to a fourth aspect, this application provides a control apparatus for an energy storage system. The energy storage system includes a battery control unit BCU, N battery monitor units BMUs, N switch units, and N battery packs connected in series. The N BMUs, the N battery packs, and the N switch units are in a one-to-one correspondence with each other. N is an integer greater than 1. The control apparatus includes: a receiving module, for the BCU to receive power indication information sent by each BMU; a determining module, for the BCU to determine, based on the power indication information, whether remaining power of a battery pack correspondingly connected to each BMU meets a first preset condition or a second preset condition; and a sending module, when the remaining power of the battery pack correspondingly connected to each BMU meets the first preset condition and the energy storage system is in a charging state, and/or when the remaining power of the battery pack correspondingly connected to each BMU meets the second preset condition and the energy storage system is in a discharging state, for the BCU to send control indication information to each BMU. The power indication information indicates the remaining power of the battery pack correspondingly connected to each BMU. The control indication information indicates the BMU to control a correspondingly connected switch unit to perform off processing on the correspondingly connected battery pack. The off processing includes disconnecting a current path of a battery pack correspondingly connected to each switch unit and ensuring that a current path of the energy storage system is connected.

With reference to the fourth aspect, in a first possible implementation, the determining module is further for the BCU to determine, at a startup phase of the BCU, whether the energy storage system needs to perform charging. The sending module is further for, when the energy storage system needs to perform charging, the BCU to send the control indication information to a BMU correspondingly connected to a charge-disabled battery pack in the N battery packs. The charge-disabled battery pack includes a battery pack whose remaining power is greater than or equal to a first preset power value.

With reference to the fourth aspect, in a second possible implementation, the determining module is further for the BCU to determine, at a startup phase of the BCU, whether the energy storage system needs to perform discharging. The sending module is further for, when the energy storage system needs to perform discharging, the BCU to send the control indication information to a BMU correspondingly connected to a discharge-disabled battery pack in the N battery packs. The discharge-disabled battery pack includes a battery pack whose remaining power is less than or equal to a second preset power value.

With reference to the fourth aspect, in a third possible implementation, the determining module is further for the BCU to determine, at a startup phase of the BCU, whether the energy storage system needs to perform charging and whether the energy storage system needs to perform discharging; and when the energy storage system does not need to perform charging and does not need to perform discharging, for the BCU to determine whether a quantity S of operational battery packs in the N battery packs is greater than or equal to a minimum quantity M of battery packs required for running the energy storage system. The operational battery packs include battery packs other than a charge-disabled battery pack, a discharge-disabled battery pack, and a faulty battery pack in the energy storage system. The charge-disabled battery pack includes a battery pack whose remaining power is greater than or equal to the first preset power value. The discharge-disabled battery pack includes a battery pack whose remaining power is less than or equal to the second preset power value. The sending module is further for, when S is greater than or equal to M, the BCU to send the control indication information to BMUs correspondingly connected to the charge-disabled battery pack and the discharge-disabled battery pack.

With reference to the third possible implementation, in a fourth possible implementation, the determining module is further for, when S is less than M, the BCU to determine whether a sum of S and a quantity N1 of charge-disabled battery packs in the energy storage system is greater than or equal to M. The sending module is further for, when the sum of S and N1 is greater than or equal to M, the BCU to send the control indication information to the BMU correspondingly connected to the discharge-disabled battery pack.

With reference to the third possible implementation, in a fifth possible implementation, the determining module is further for, when S is less than M, the BCU to determine whether a sum of S and a quantity N2 of discharge-disabled battery packs in the energy storage system is greater than or equal to M. The sending module is further for, when the sum of S and N2 is greater than or equal to M, the BCU to send the control indication information to the BMU correspondingly connected to the charge-disabled battery pack.

According to a fifth aspect, this application provides a control method for an energy storage system. The energy storage system includes N battery monitor units BMUs, N switch units, and N battery packs connected in series. The N BMUs, the N battery packs, and the N switch units are in a one-to-one correspondence with each other. N is an integer greater than 1. A control apparatus includes: a monitoring module, for each of the N BMUs to monitor remaining power of a battery pack correspondingly connected to each BMU; and a sending module, when the energy storage system is in a charging state and the remaining power of the battery pack correspondingly connected to each BMU meets a first preset condition, and/or when the energy storage system is in a discharging state and the remaining power of the battery pack correspondingly connected to each BMU meets a second preset condition, for each BMU to send a control signal to a switch unit correspondingly connected to each BMU. The control signal is used for controlling the switch unit correspondingly connected to each BMU to perform off processing on the battery pack correspondingly connected to each BMU. The off processing includes disconnecting a current path of a battery pack correspondingly connected to each switch unit and ensuring that a current path of the energy storage system is connected.

According to the control method, in a running process of the energy storage system, off processing is performed on a battery pack that meets the first preset condition or a battery pack that meets the second preset condition, and other battery packs continue to be charged or discharged. Finally, all the battery packs reach a same value. When the energy storage system performs charging or discharging again, because battery energy is the same, time for completing charging or discharging is basically the same. In this way, long power backup duration of the energy storage system can be implemented.

With reference to the fifth aspect, in a first possible implementation, each of the N switch units includes a first switch and a second switch. Each BMU is separately connected to a first switch and a second switch in the switch unit correspondingly connected to each BMU. Each of the N battery packs is connected in series to a first switch in the switch unit correspondingly connected to each battery pack, to obtain a sub-circuit corresponding to each battery pack. A second switch in the switch unit correspondingly connected to each battery pack is connected in parallel to the sub-circuit corresponding to each battery pack. The sending module is specifically for: that each BMU sends a control signal to a switch unit correspondingly connected to each BMU including: when the energy storage system is in a charging state and the remaining power of the battery pack correspondingly connected to each BMU meets the first preset condition, and/or when the energy storage system is in a discharging state and the remaining power of the battery pack correspondingly connected to each BMU meets the second preset condition, sending a first control signal to the first switch in the switch unit correspondingly connected to each BMU, and sending a second control signal to the second switch in the switch unit correspondingly connected to each BMU. The first control signal is used for controlling a switch to be turned off. The second control signal is used for controlling a switch to be turned on.

With reference to the first possible implementation, in a second possible implementation, the energy storage system further includes a battery control unit BCU. The apparatus further includes a receiving module, for each BMU to receive control indication information sent by the BCU. The control indication information indicates the BMU to control the correspondingly connected switch unit to perform off processing on the correspondingly connected battery pack. The sending module is specifically for: that each BMU sends a first control signal to the first switch in the switch unit correspondingly connected to each BMU, and sends a second control signal to the second switch in the switch unit correspondingly connected to each BMU including: Each BMU sends, based on the control indication information, the first control signal to the first switch in the switch unit correspondingly connected to each BMU, and sends the second control signal to the second switch in the switch unit correspondingly connected to each BMU.

According to a sixth aspect, this application provides a computer-readable storage medium. The storage medium stores a computer program or instructions. When the computer program or the instructions is or are executed by a processor, the method according to any one of the second aspect, the third aspect, or the possible implementations thereof is implemented.

According to a seventh aspect, this application provides a computer program product. The computer program product includes computer program code. When the computer program code runs on a computer, the computer is enabled to implement the method according to any one of the second aspect, the third aspect, or the possible implementations thereof.

### BRIEF DESCRIPTION OF DRAWINGS

FIG. 1 is a schematic diagram of an application scenario of an energy system according to an embodiment of this application;
FIG. 2 is a schematic diagram of a structure of an energy storage system according to an embodiment of this application;
FIG. 3 is a schematic diagram of a structure of an energy storage system according to another embodiment of this application;
FIG. 4 is a schematic diagram of a structure of an energy storage system according to a third embodiment of this application;
FIG. 5 is an example flowchart of a control method for an energy storage system according to an embodiment of this application;
FIG. 6 is a schematic diagram of a structure of an energy storage system according to a fourth embodiment of this application;
FIG. 7 is an example flowchart of a control method for an energy storage system according to another embodiment of this application;
FIG. 8 is a schematic diagram of a structure of an energy storage system according to a fifth embodiment of this application;
FIG. 9 is an example flowchart of a control method for an energy storage system according to still another embodiment of this application;
FIG. 10 is a schematic diagram of a structure of an energy storage system according to a sixth embodiment of this application;
FIG. 11 is an example flowchart of a control method for an energy storage system at a startup phase according to an embodiment of this application;
FIG. 12A and FIG. 12B are an example flowchart of a control method for an energy storage system at a startup phase according to another embodiment of this application;
FIG. 13A and FIG. 13B are an example flowchart of a control method for an energy storage system at a running phase according to an embodiment of this application; and
FIG. 14 is a schematic diagram of an architecture of an energy system according to an embodiment of this application.

### DESCRIPTION OF EMBODIMENTS

To better describe embodiments of this application, the following first describes related concepts in embodiments of this application.
1. Battery control unit (battery control unit, BCU)
   The BCU is configured to monitor a voltage, a temperature, a current, and an insulation resistance of a battery string, and control a high-voltage direct current circuit relay and estimation of a state of health (state of health, SOH) and a state of charge (state of charge, SOC) of the battery string.
2. Battery monitor unit (battery monitor unit, BMU)
   The BMU is configured to monitor battery physical parameters in real time, estimate a battery status, perform online diagnosis and warning, control charging, discharging, and pre-charging, perform balancing management and heat management, and the like.
3. Energy management system (energy manage system, EMS)
   The EMS is a general name of a modern power grid dispatching automation system (including hardware and software). Main functions of the EMS include basic functions and application functions. The basic functions include a computer, an operating system, and an EMS support system.

The following describes the implementations of embodiments of this application in detail with reference to accompanying drawings.

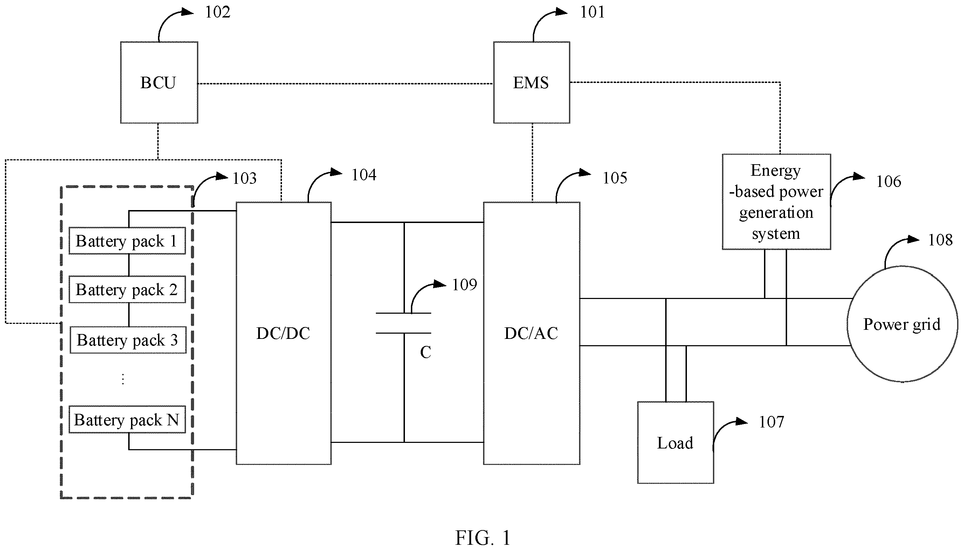

FIG. 1 is a schematic diagram of an application scenario of an energy system according to an embodiment of this application. As shown in FIG. 1, the energy system includes an EMS 101, a BCU 102, an energy storage rack 103, a DC/DC converter 104, a DC/AC converter 105, an energy-based power generation system 106, a load 107, a power grid 108, and a bus capacitor 109. The energy storage rack 103 includes N battery packs connected in series. N is an integer greater than 1.

The energy storage rack 103 is connected to the DC/DC converter 104. The DC/DC converter 104 is connected to the DC/AC converter 105. The DC/AC converter 105 is connected to the load 107 and the power grid 108. The energy-based power generation system is connected to the DC/AC converter 105 on an alternating current side. The EMS 101 is connected to the DC/AC converter 105, the BCU 102, and the energy-based power generation system 106 through a communications cable. The BCU 102 is further connected to the energy storage rack 103 and the DC/DC converter 104 through a communications cable, to implement data transmission.

Optionally, the EMS 101 is specifically configured to determine, based on information about the energy-based power generation system 106, the BCU 102, and the DC/AC converter 105, that the energy storage rack 103 is in a power supply state, a charging state, or a stopped state. The BCU 102 is configured to collect information such as a state of charge (state of charge, SOC) and a state of health (state of health, SOH) of each battery pack in the energy storage rack 103. The energy storage rack 103 may be configured to store electric energy from the energy-based power generation system 106, and may be further configured to supply electric energy to the load 107. The DC/DC converter 104 may implement boost or buck conversion from the energy storage rack 103 to the DC/AC converter 105 side, or may implement boost or buck conversion from the DC/AC converter 105 to the energy storage rack 103 side. A boost (BOOST) circuit structure having a boost function, a BUC circuit structure having a buck function, or a buck or boost (BUCK-BOOST) circuit structure having both boost and buck functions may be used. When the energy storage rack 103 is charged, the DC/AC converter 105 converts an alternating current of the energy-based power generation system 106 into a direct current that can be stored, or when the load 107 is discharged, converts a direct current that is of the energy storage rack 103 and that passes through the DC/DC converter 104 into an alternating current that can be used by the load 107. The energy-based power generation system 106 is configured to store electric energy that cannot be consumed in the energy storage rack 103, and is also configured to make power generation of the power grid 108 tend to be stable when power generation is insufficient or power consumption peaks occur. The load 107 is configured to consume electric energy of the energy storage rack 103, or/and electric energy of the power grid 108, or/and electric energy of the energy-based power generation system 106. The power grid 108 is configured to supply power to the load 107. The bus capacitor 109 is configured to perform reactive power compensation, improve line power, and the like.

The energy-based power generation system 106 may be a photovoltaic power generation system, a tidal power generation system, a wind power generation system, or the like. The load 107 may be a power-consuming device such as a motor, a light, or a server. The power grid 108 may be any power supply network.

For example, after the energy system is powered on, the energy storage rack 103 is connected to the bus capacitor 109 by using the DC/DC converter 104, and then the DC/AC converter 105 is connected to the power grid or supplies power to the load. Alternatively, the energy-based power generation system is connected to the DC/AC converter on the alternating current side, and finally charges the energy storage rack 103.

In the conventional technology, the energy storage rack 103 is mainly formed by connecting a plurality of battery packs in series. For example, there are five battery packs, and the five battery packs are connected end to end (electrodes of first and last battery packs are opposite to each other) in sequence. However, because a state of health (state of health, SOH) and a state of charge (state of charge, SOC) of each battery pack are different, some battery packs are fully charged or discharged in advance. However, in a manner of connecting battery packs in series, currents of the battery packs are the same, and a total current usually needs to be limited based on a minimum battery pack current. As a result, a battery with more remaining energy cannot be fully discharged, and a battery pack with less remaining energy cannot be fully charged. In this way, power backup duration of the energy storage rack 103 is shortened.

For a problem that the power backup duration of the energy storage rack is short in the conventional technology, embodiments of this application provide an energy storage system and a control method thereof. In the technical solution provided in this application, a switch unit is added to each battery pack in the energy storage rack, and in a running process of the energy system, connection and off of the battery pack are controlled, so that all battery packs are in a synchronous state. In this way, long power backup duration can be implemented.

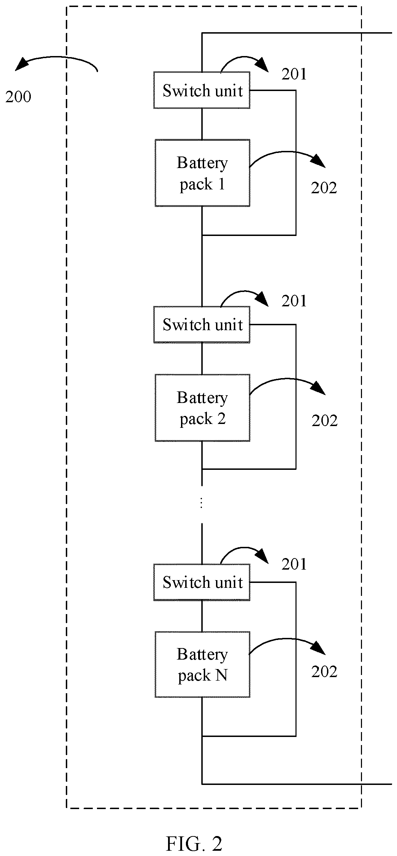

FIG. 2 is a schematic diagram of a structure of an energy storage system according to an embodiment of this application. As shown in FIG. 2, the energy storage system 200 includes N switch units 201 and N battery packs 202 connected in series. The N switch units 201 are separately connected to two ends of the N battery packs 202 in a one-to-one correspondence. N is an integer greater than 1.

Each of the N switch units 201 is configured to: when the energy storage system is in a charging state and remaining power of a battery pack correspondingly connected to each switch unit meets a first preset condition, and/or when the energy storage system is in a discharging state and the remaining power of the battery pack correspondingly connected to each switch unit meets a second preset condition, perform off processing on the battery pack correspondingly connected to each switch unit.

The first preset condition includes being greater than or equal to a first preset power value. The second preset condition includes being less than or equal to a second preset power value. The first preset power value is greater than the second preset power value. The first preset power value and the second preset power value may be determined based on an SOC and an SCE of the battery pack, or may be determined based on a voltage of the battery pack. The off processing includes disconnecting a current path of the battery pack correspondingly connected to each switch unit and ensuring that a current path of the energy storage system is connected.

In this embodiment, in a process in which the energy storage system performs charging or discharging, a corresponding switch unit is controlled to perform off processing on a battery pack that is correspondingly connected to the switch unit and that meets the first preset condition or a battery pack that is correspondingly connected to the switch unit and that meets the second preset condition, and other battery packs continue to be charged or discharged. Finally, all the battery packs reach a same value. When the energy storage system performs charging or discharging again, because battery energy is the same, time for completing charging or discharging is basically the same. In this way, long power backup duration of the energy storage system can be implemented.

Further, after the battery pack meeting the first preset condition or the battery pack meeting the second preset condition is off, another battery pack in the energy storage system may still be charged or discharged at a maximum current without being affected by off of the battery pack. In this way, a problem that power is limited can be resolved.

For example, the battery pack 202 may include an electrochemical cell, a storage battery, a lithium-ion battery, and the like.

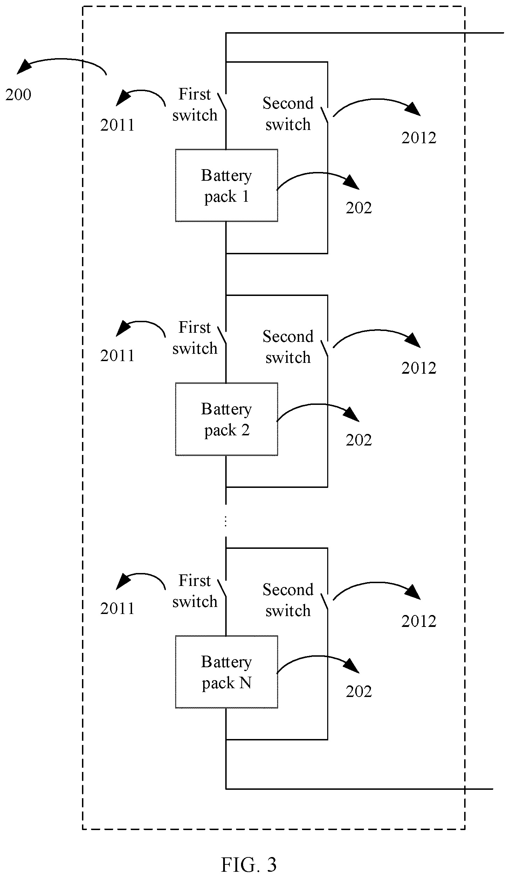

FIG. 3 is a schematic diagram of a structure of an energy storage system according to another embodiment of this application. As shown in FIG. 3, the switch unit 201 may include a first switch 2011 and a second switch 2012. Each of the N battery packs 202 is connected in series to a first switch 2011 in a switch unit 201 correspondingly connected to each battery pack, to obtain a sub-circuit corresponding to each battery pack. A second switch 2012 in the switch unit correspondingly connected to each battery pack is connected in parallel to the sub-circuit corresponding to each battery pack.

When the first switch 2011 is turned off and the second switch 2012 is turned on, the correspondingly connected battery pack 202 may be off from the current path. When the first switch 2011 is turned on and the second switch 2012 is turned off, the correspondingly connected battery pack 202 may be connected to the current path.

For example, the first switch 2011 and the second switch 2012 may be switch components such as relays.

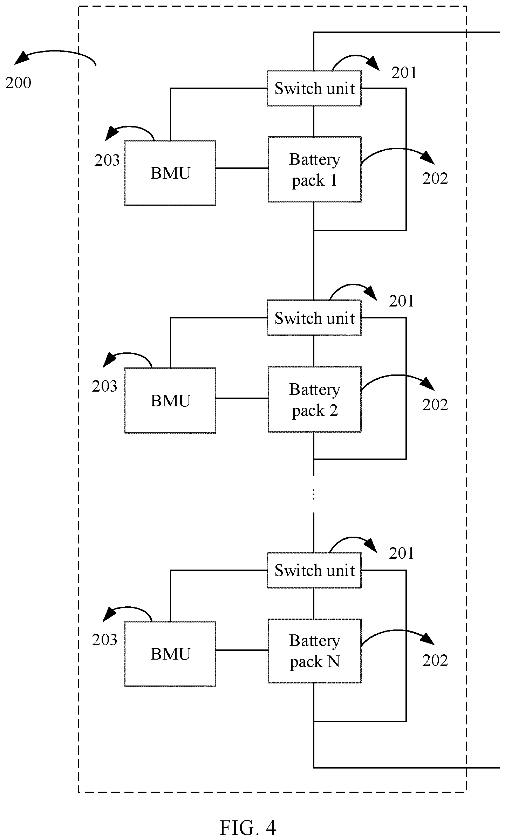

FIG. 4 is a schematic diagram of a structure of an energy storage system according to a third embodiment of this application. As shown in FIG. 4, in addition to the units in the energy storage system shown in FIG. 2, the energy storage system may further include N BMUs 203. The N BMUs 203, the N battery packs 202, and the N switch units 201 are in a one-to-one correspondence with each other.

The BMU may monitor remaining power of a battery pack correspondingly connected to each BMU, and the BMU may send a control signal to a switch unit correspondingly connected to the BMU.

The switch unit may receive the control signal sent by the correspondingly connected BMU.

The control signal in this embodiment includes: controlling the corresponding switch unit to perform off processing on the battery pack correspondingly connected to the BMU, and/or controlling the corresponding switch unit to perform connection processing on the battery pack correspondingly connected to the BMU. The off processing includes disconnecting a current path of the battery pack correspondingly connected to the switch unit and ensuring that a current path of the energy storage system is connected. The connection processing includes connecting the current path of the battery pack correspondingly connected to the switch unit.

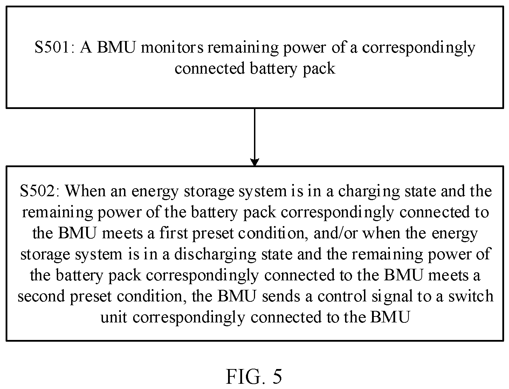

The following describes, with reference to FIG. 5, a control method performed by the BMU in the energy storage system shown in FIG. 4. As shown in FIG. 5, the method may include S501 and S502. The control method may be performed by any BMU in the energy storage system shown in FIG. 4.

S501: A BMU monitors remaining power of a correspondingly connected battery pack.

S502: When the energy storage system is in a charging state and the remaining power of the battery pack correspondingly connected to the BMU meets a first preset condition, and/or when the energy storage system is in a discharging state and the remaining power of the battery pack correspondingly connected to the BMU meets a second preset condition, the BMU sends a control signal to a switch unit correspondingly connected to the BMU. The control signal is used for controlling the switch unit correspondingly connected to the BMU to perform off processing on the battery pack correspondingly connected to the BMU. The off processing includes disconnecting a current path of a battery pack correspondingly connected to each switch unit and ensuring that a current path of the energy storage system is connected.

According to the control method, in a running process of the energy storage system, off processing is performed on a battery pack that meets the first preset condition or a battery pack that meets the second preset condition, and other battery packs continue to be charged or discharged. Finally, all the battery packs reach a same value. When the energy storage system performs charging or discharging again, because battery energy is the same, time for completing charging or discharging is basically the same. In this way, long power backup duration of the energy storage system can be implemented.

Optionally, when the energy storage system is in a charging state and remaining power of all the battery packs meets the first preset condition, and/or when the energy storage system is in a discharging state and the remaining power of all the battery packs meets the second preset condition, a BMU correspondingly connected to a battery pack that is off in the energy storage system sends a control signal to the switch unit correspondingly connected to the BMU. The control signal is used for controlling the switch unit correspondingly connected to the BMU to perform connection processing on the battery pack correspondingly connected to the BMU. The connection processing includes connecting a current path of a battery pack correspondingly connected to each switch unit and ensuring that a current path of the energy storage system is connected.

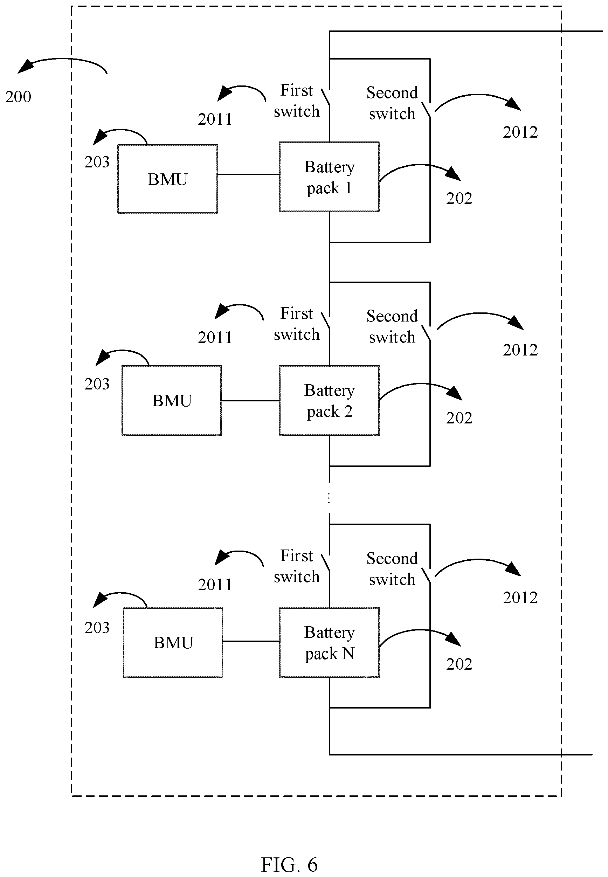

FIG. 6 is a schematic diagram of a structure of an energy storage system according to a fourth embodiment of this application. As shown in FIG. 6, in addition to the units in FIG. 3, the energy storage system may further include N BMUs 203. The N BMUs 203 are separately in a one-to-one correspondence with N battery packs 202, N first switches 2011, and N second switches 2012. Each BMU 203 is separately connected to a first switch 2011 and a second switch 2012 in a switch unit correspondingly connected to each BMU 203.

Each BMU may send a first control signal and a second control signal to the correspondingly connected first switch, and may send the first control signal and the second control signal to the correspondingly connected second switch. The first control signal is a signal that can drive a switch to be turned off, and the second control signal is a signal that can drive a switch to be turned on.

Correspondingly, the first switch may be turned off based on the first control signal and be turned on based on the second control signal, and the second switch may be turned off based on the second control signal and be turned on based on the second control signal.

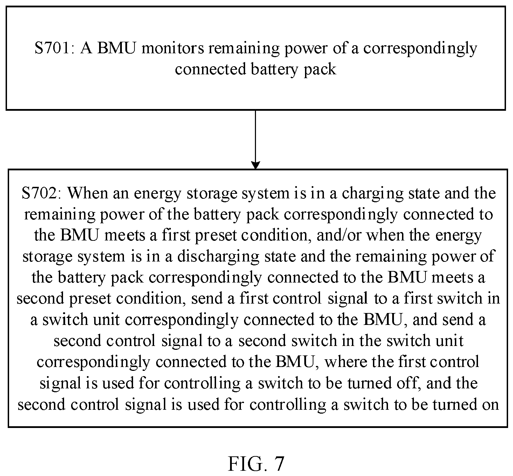

The following describes, with reference to FIG. 7, a control method performed by the BMU in the energy storage system shown in FIG. 6. As shown in FIG. 7, the method may include S701 and S702. The method may be performed by any BMU in the energy storage system shown in FIG. 6.

S701: A BMU monitors remaining power of a correspondingly connected battery pack.

S702: When the energy storage system is in a charging state and the remaining power of the battery pack correspondingly connected to the BMU meets a first preset condition, and/or when the energy storage system is in a discharging state and the remaining power of the battery pack correspondingly connected to the BMU meets a second preset condition, send a first control signal to a first switch in a switch unit correspondingly connected to the BMU, and send a second control signal to a second switch in the switch unit correspondingly connected to the BMU, where the first control signal is used for controlling a switch to be turned off, and the second control signal is used for controlling a switch to be turned on.

In the method, the first control signal and the second control signal that are sent by the BMU correspondingly connected to each switch unit are received, and a first switch 2011 is controlled to be turned off and a second switch 2012 is controlled to be turned on, to perform off on a battery pack 202 correspondingly connected to the BMU from a current path.

Optionally, when the energy storage system is in a charging state and remaining power of all battery packs meet the first preset condition, and/or when the energy storage system is in a discharging state and the remaining power of all the battery packs meet the second preset condition, a BMU correspondingly connected to a battery pack that is off in the energy storage system sends the second control signal to the first switch in the switch unit correspondingly connected to the BMU, and sends the first control signal to the second switch in the switch unit correspondingly connected to the BMU. The first control signal is used for controlling the switch to be turned off. The second control signal is used for controlling the switch to be turned on, and performing connection on the battery pack correspondingly connected to the BMU.

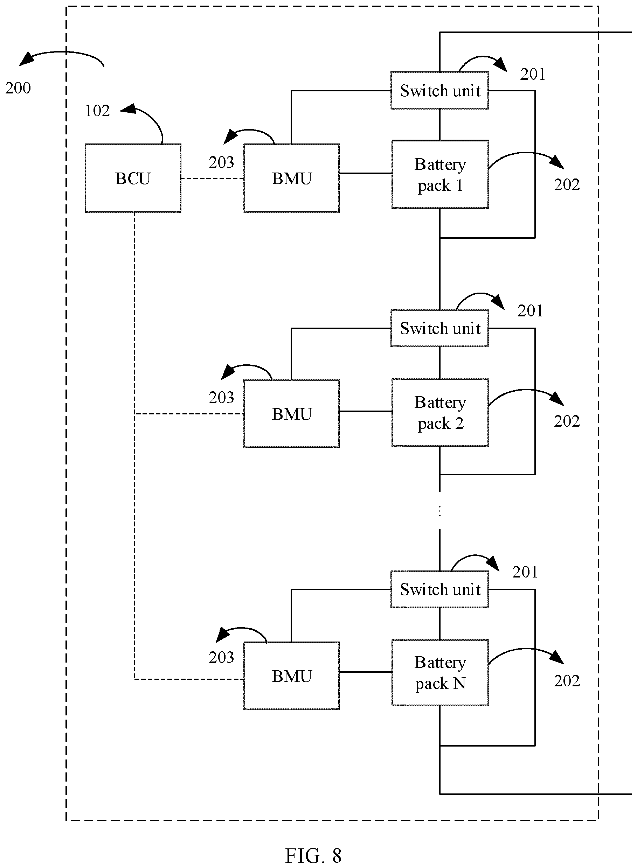

FIG. 8 is a schematic diagram of a structure of an energy storage system according to a fifth embodiment of this application. As shown in FIG. 8, in addition to the units in the energy storage system shown in FIG. 4, the energy storage system may further include a battery control unit BCU 102. The BCU 102 is connected to each BMU 203. The BCU 102 may be connected to the BMU 203 in a wired or wireless manner. The BCU 102 may communicate with each BMU 203.

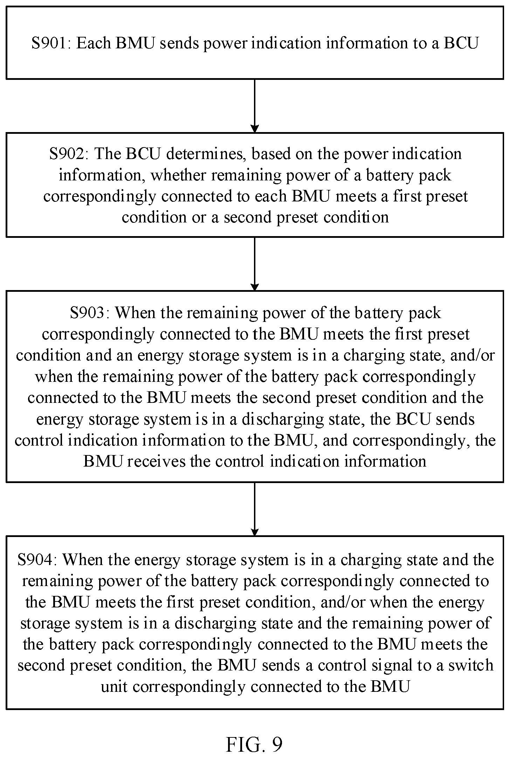

The following describes, with reference to FIG. 9, a control method for the energy storage system shown in FIG. 8. As shown in FIG. 9, the method includes S901, S902, S903, and S904.

S901: Each BMU sends power indication information to a BCU. Correspondingly, the BCU receives the power indication information sent by each BMU.

Each of N BMUs monitors power indication information of a battery pack correspondingly connected to each BMU. The power indication information indicates remaining power of the battery pack correspondingly connected to the BMU, and then sends the power indication information to the BCU.

S902: The BCU determines, based on the power indication information, whether the remaining power of the battery pack correspondingly connected to each BMU meets a first preset condition or a second preset condition.

The first preset condition includes being greater than or equal to a first preset power value. The second preset condition includes being less than or equal to a second preset power value. The first preset power value is greater than the second preset power value. The first preset power value and the second preset power value may be determined based on an SOC and an SCE of the battery pack, or may be determined based on a voltage of the battery pack.

S903: When the remaining power of the battery pack correspondingly connected to the BMU meets the first preset condition and the energy storage system is in a charging state, and/or when the remaining power of the battery pack correspondingly connected to the BMU meets the second preset condition and the energy storage system is in a discharging state, the BCU sends control indication information to the BMU, and correspondingly, the BMU receives the control indication information.

The control indication information indicates the BMU to control a correspondingly connected switch unit to perform off processing on the correspondingly connected battery pack. The off processing includes disconnecting a current path of a battery pack correspondingly connected to each switch unit and ensuring that a current path of the energy storage system is connected.

S904: When the energy storage system is in a charging state and the remaining power of the battery pack correspondingly connected to the BMU meets the first preset condition, and/or when the energy storage system is in a discharging state and the remaining power of the battery pack correspondingly connected to the BMU meets the second preset condition, the BMU sends a control signal to the switch unit correspondingly connected to the BMU. The control signal is used for controlling the switch unit correspondingly connected to the BMU to perform off processing on the battery pack correspondingly connected to the BMU. The off processing includes disconnecting the current path of the battery pack correspondingly connected to each switch unit and ensuring that the current path of the energy storage system is connected.

According to the method in this embodiment, the battery control unit BCU performs data communication with each BMU, to more accurately control the energy storage system.

Optionally, when the energy storage system is in a charging state and remaining power of all battery packs meets the first preset condition, and/or when the energy storage system is in a discharging state and the remaining power of all the battery packs meets the second preset condition, a BMU correspondingly connected to a battery pack that is off in the energy storage system sends the control signal to the switch unit correspondingly connected to the BMU. The control signal is used for controlling the switch unit correspondingly connected to the BMU to perform connection processing on the battery pack correspondingly connected to the BMU. The connection processing includes connecting the current path of the battery pack correspondingly connected to each switch unit and ensuring that the current path of the energy storage system is connected.

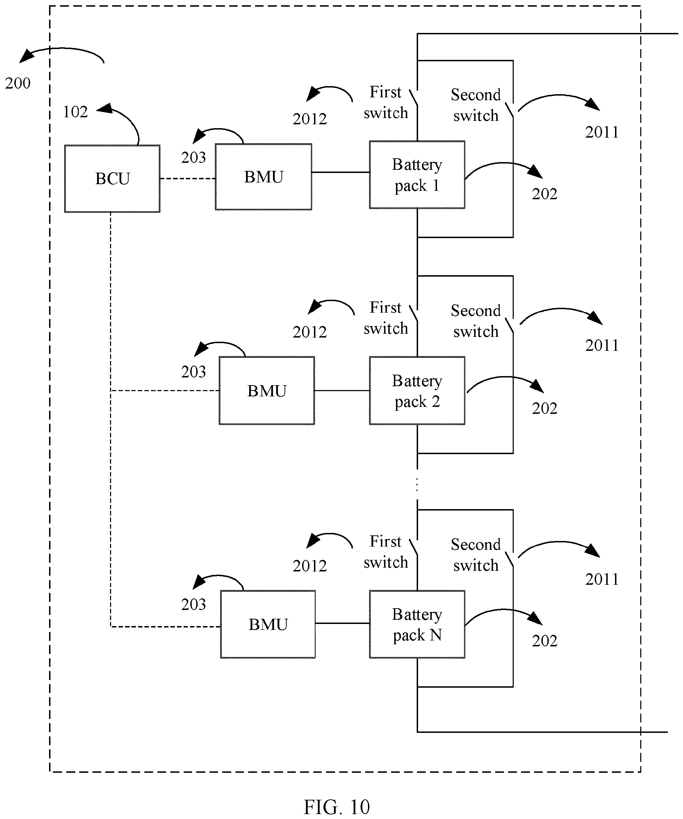

As shown in FIG. 10, in the energy storage system shown in FIG. 8, each switch unit 201 may include a first switch 2011 and a second switch 2012. Each of N battery packs 202 is connected in series to a first switch 2011 in a switch unit 201 correspondingly connected to each battery pack, to obtain a sub-circuit corresponding to each battery pack. A second switch 2012 in the switch unit 201 correspondingly connected to each battery pack is connected in parallel to the sub-circuit corresponding to each battery pack. Each BMU is separately connected to a first switch 2011 and a second switch 2012 in a switch unit 201 correspondingly connected to each BMU.

When each switch unit 201 includes the first switch 2011 and the second switch 2012, that the BMU sends, based on control indication information, a control signal to the correspondingly connected switch unit, to control the switch unit to perform off processing on the correspondingly connected battery pack may include: The BMU sends, based on the control indication information, a first control signal to the first switch in the correspondingly connected switch unit, and sends a second control signal to the second switch in the correspondingly connected switch unit. The first control signal is used for controlling a switch to be turned off. The second control signal is used for controlling a switch to be turned on.

In the method, a BCU sends the control indication information to each BMU. The BMU sends, based on the control indication information, the first control signal to the first switch 2011 in the correspondingly connected switch unit, and sends the second control signal to the second switch 2012 in the correspondingly connected switch unit. The first switch 2011 is controlled to be turned off and the second switch 2012 is controlled to be turned on, to perform off on a battery pack 202 correspondingly connected to the BMU from a current path. In the method, the battery control unit BCU performs data communication with each BMU, to more accurately control of the energy storage system.

When each switch unit 201 includes the first switch 2011 and the second switch 2012, that the BMU sends, based on control indication information, a control signal to the correspondingly connected switch unit, to control the switch unit to perform connection processing on the correspondingly connected battery pack may include: The BMU sends, based on the control indication information, the second control signal to the first switch in the correspondingly connected switch unit, and sends the first control signal to the second switch in the correspondingly connected switch unit.

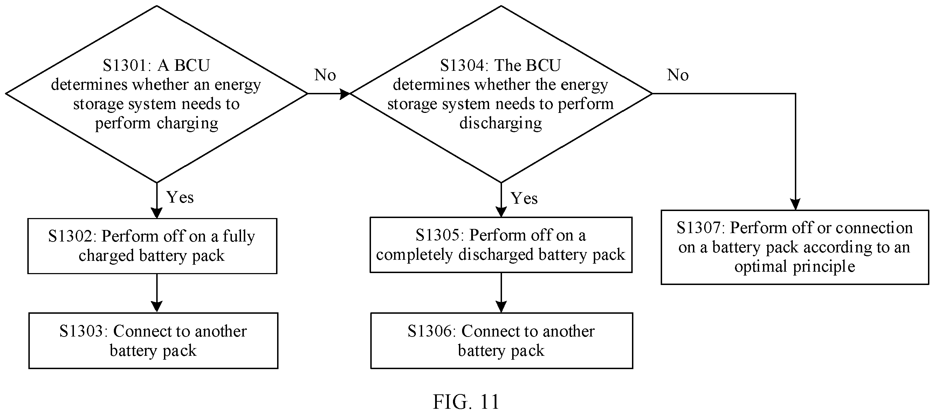

FIG. 11 is an example flowchart of a control method for an energy storage system according to an embodiment of this application. As shown in FIG. 11, the control method may include the following steps: S1301, S1302, S1303, S1304, S1305, S1306, and S1307.

S1301: A BCU determines whether the energy storage system needs to perform charging. If the energy storage system needs to perform charging, S1302 is performed; or if the energy storage system does not need to perform charging, S1304 is performed.

In an example, the BCU determines, within a preset time period after power-on, whether the energy storage system needs to perform charging. In this embodiment, the preset time period during which the BCU is powered on may be referred to as a startup phase of the BCU, and a phase after the startup phase may be referred to as a running phase. Duration of the preset time period may be determined based on experience of a person skilled in the art, or may be determined based on response efficiency of the energy storage system.

The BCU determines whether the energy storage system needs to perform charging based on information such as a current value or a current circulation state of the energy storage system. The current circulation state refers to a state in which a current circulates in a specific direction and a specific path.

S1302: Perform off on a fully charged battery pack. Perform off on the fully charged battery pack may be implemented in the following manners.

When the energy storage system needs to perform charging, the BCU sends an instruction to N BMUs. The instruction is used for instructing the BMUs to detect remaining power information of corresponding connected battery packs.

Each BMU sends power indication information to the BCU. The power indication information sent by each BMU indicates remaining power of a battery pack correspondingly connected to the BMU.

The BCU determines, based on the power indication information sent by each BMU, whether the remaining power of the battery pack correspondingly connected to the BMU meets a first preset condition.

If the remaining power of the battery pack correspondingly connected to the BMU meets the first preset condition, the BCU may determine that the battery pack is a fully charged battery pack, and send first control indication information to the BMU. The first control indication information indicates the BMU to perform off on the correspondingly connected battery pack. The first preset condition includes being greater than or equal to a first preset power value. The first preset power value may be determined based on an SOC and an SCE of the battery pack, or may be determined based on a voltage of the battery pack.

After receiving the first control indication information, the BMU sends a first control signal to a correspondingly connected first switch, and sends a second control signal to a correspondingly connected second switch.

The first switch that receives the first control signal is turned off, and the second switch that receives the second control signal is turned on. In this way, a current in the energy storage system no longer flows through a corresponding battery pack, but flows to another battery pack through the second switch, so that the corresponding battery pack is off from a current path of the energy storage system.

It may be understood that, after a battery pack is off from an energy storage rack, the battery pack no longer participates in working, that is, no longer participates in charging, but a working status of another battery pack is not affected.

S 1303: Connect to another battery pack. Connecting to the another battery pack may be implemented in the following manners.

After detecting the remaining power information of the correspondingly connected battery pack, each BMU sends the remaining power information (that is, the power indication information) of the correspondingly connected battery pack to the BCU. In this case, the BCU may determine, based on the power indication information sent by each BMU, whether the remaining power of the battery pack correspondingly connected to each BMU meets the first preset condition.

If the remaining power of the battery pack correspondingly connected to the BMU does not meet the first preset condition, the BCU may determine that the battery pack is a battery pack that needs to be charged, and send second control indication information to the BMU. The second control indication information indicates the BMU to perform connection on the corresponding connected battery pack.

After receiving the second control indication information, the BMU sends the second control signal to the correspondingly connected first switch, and sends the first control signal to the correspondingly connected second switch.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system.

Optionally, in this embodiment, a sequence of steps S1302 and S1303 is not limited, and steps S1302 and S1303 may be performed in another sequence.

Further, the system starts charging.

S1304: The BCU determines whether the energy storage system needs to perform discharging. If the energy storage system needs to perform discharging, S1305 is performed; or if the energy storage system does not need to perform discharging, S1307 is performed.

When the BCU is in a startup phase, the BCU determines whether the energy storage system needs to perform discharging based on information such as a current value or a current circulation state of the energy storage system.

51305: Perform off on a completely discharged battery pack. Perform off on the completely discharged battery pack may be implemented in the following manners.

When the energy storage system needs to perform discharging, the BCU sends an instruction to the N BMUs. The instruction is used for instructing the BMUs to detect remaining power information of the corresponding connected battery packs.

Each BMU sends power indication information to the BCU. The power indication information sent by each BMU indicates remaining power of the battery pack correspondingly connected to the BMU.

The BCU determines, based on the power indication information sent by each BMU, whether the remaining power of the battery pack correspondingly connected to the BMU meets a second preset condition.

If the remaining power of the battery pack correspondingly connected to the BMU meets the second preset condition, the BCU may determine that the battery pack is a completely discharged battery pack, and send the first control indication information to the BMU. The first control indication information indicates the BMU to perform off on the correspondingly connected battery pack. The second preset condition includes being less than or equal to a second preset power value. The second preset power value may be determined based on an SOC and an SCE of the battery pack, or may be determined based on a voltage of the battery pack.

After receiving the first control indication information, the BMU sends the first control signal to the correspondingly connected first switch, and sends the second control signal to the correspondingly connected second switch.

The first switch that receives the first control signal is turned off, and the second switch that receives the second control signal is turned on. In this way, the battery pack does not participate in supplying power to a load by the energy storage system, but flows to another battery pack by using the second switch, so that the another battery pack supplies power to the load.

It may be understood that, after a battery pack is off from the energy storage rack, the battery pack no longer participates in working, that is, no longer participates in discharging, but a working status of another battery pack is not affected.

S 1306: Connect to another battery pack. Connecting to the another battery pack may be implemented in the following manners.

After detecting the remaining power information of the correspondingly connected battery pack, each BMU sends the remaining power information (that is, the power indication information) of the correspondingly connected battery pack to the BCU. In this case, the BCU may determine, based on the power indication information sent by each BMU, whether the remaining power of the battery pack correspondingly connected to each BMU meets the second preset condition.

If the remaining power of the battery pack correspondingly connected to the BMU does not meet the second preset condition, the BCU may determine that the battery pack is a battery pack that needs to be discharged, and send the second control indication information to the BMU. The second control indication information indicates the BMU to perform connection on the corresponding connected battery pack.

After receiving the second control indication information, the BMU sends the second control signal to the correspondingly connected first switch, and sends the first control signal to the correspondingly connected second switch.

The first switch that receives the second control signal is turned on, and the second switch that receives the first control signal is turned off. In this way, a current of the battery pack participates in the energy storage system, that is, flows to the load by using the first switch, so that the correspondingly connected battery pack supplies power to the load, that is, is discharged.

Optionally, in this embodiment, a sequence of steps 51305 and S1306 is not limited, and steps 51305 and S1306 may be performed in another sequence.

Further, the system starts discharging.

S1307: Perform off or connection on a battery pack according to an optimal principle.

When the BCU cannot determine that the energy storage system needs to perform charging or discharging, the BCU determines a status of the battery pack according to an optimal principle.

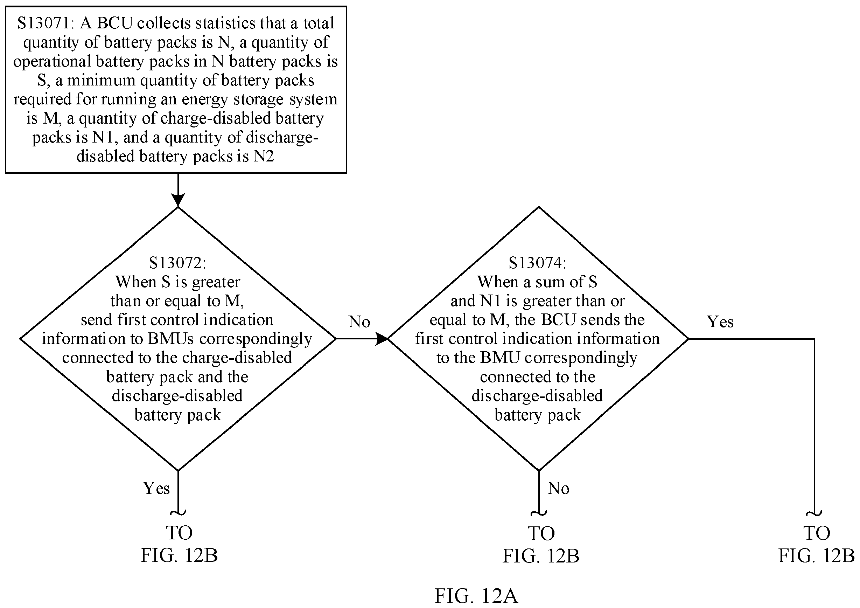

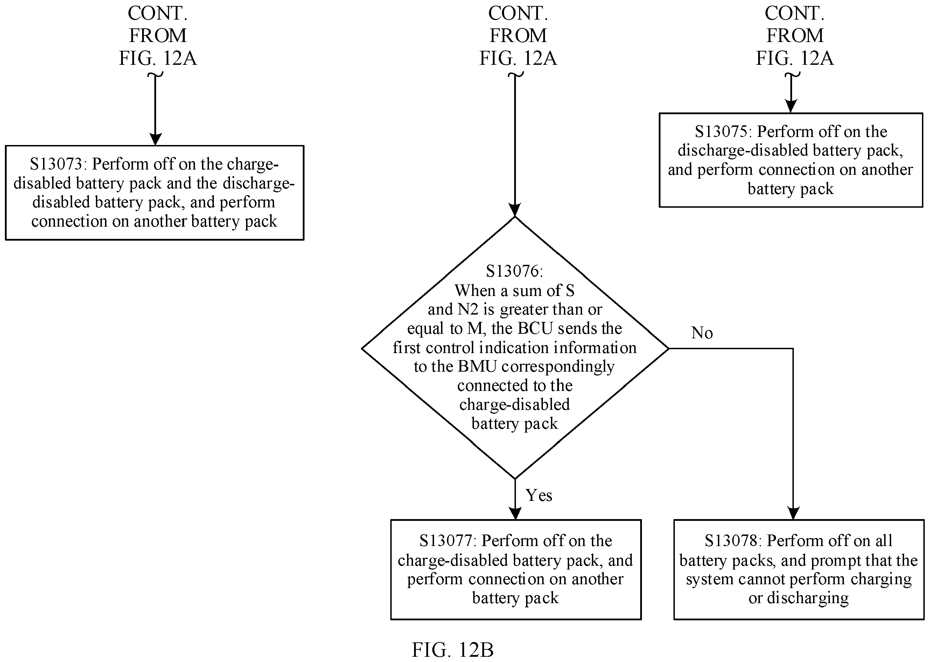

FIG. 12A and FIG. 12B show an example of a control method for performing off or connection on a battery pack according to the optimal principle. The method includes S13071, S13072, S13073, S13074, S13075, S13076, S13077, and S13078.

S13071: The BCU collects statistics that a total quantity of battery packs is N, a quantity of operational battery packs in N battery packs is S, a minimum quantity of battery packs required for running the energy storage system is M, a quantity of charge-disabled battery packs is N1, and a quantity of discharge-disabled battery packs is N2.

The operational battery packs include battery packs other than a charge-disabled battery pack, a discharge-disabled battery pack, and a faulty battery pack in the energy storage system. The charge-disabled battery pack includes a battery pack whose remaining power is greater than or equal to the first preset power value. The discharge-disabled battery pack includes a battery pack whose remaining power is less than or equal to the second preset power value. The minimum quantity M of battery packs required for running the energy storage system is a value preset by the system.

When the energy storage system needs to perform charging or discharging, the BCU sends an instruction to the N BMUs. The instruction is used for instructing the BMUs to detect remaining power information of the corresponding connected battery packs.

Each BMU sends power indication information to the BCU. The power indication information sent by each BMU indicates remaining power of the battery pack correspondingly connected to the BMU.

The BCU determines, based on the power indication information sent by each BMU, whether the remaining power of the battery pack correspondingly connected to the BMU is greater than or equal to the first preset power value or is less than or equal to the second preset power value. If the remaining power is greater than or equal to the first preset power value, the battery pack correspondingly connected to the BMU is a charge-disabled battery pack. If the remaining power is less than or equal to the second preset power value, the battery pack correspondingly connected to the BMU is a discharge-disabled battery pack. The first preset condition includes being greater than or equal to the first preset power value. The first preset power value may be determined based on an SOC and an SCE of the battery pack, or may be determined based on a voltage of the battery pack.

S13072: When S is greater than or equal to M, send the first control indication information to BMUs correspondingly connected to the charge-disabled battery pack and the discharge-disabled battery pack, and then perform 513073. When S is less than M, perform S13074.

S13073: Perform off on the charge-disabled battery pack and the discharge-disabled battery pack, and perform connection on another battery pack.

After receiving the first control indication information, the BMU sends the first control signal to first switches correspondingly connected to the charge-disabled battery pack and the discharge-disabled battery pack, and sends the second control signal to second switches correspondingly connected to the charge-disabled battery pack and the discharge-disabled battery pack.

The first switch that receives the first control signal is turned off, and the second switch that receives the second control signal is turned on. In this way, a current in the energy storage system no longer flows through a corresponding battery pack, but flows to another battery pack through the second switch, so that the corresponding battery pack is off from the current path of the energy storage system.

After receiving the second control indication information, the BMU sends the second control signal to first switches correspondingly connected to battery packs other than the charge-disabled battery pack and the discharge-disabled battery pack in the energy storage system, and sends the first control signal to second switches correspondingly connected to the battery packs other than the charge-disabled battery pack and the discharge-disabled battery pack in the energy storage system.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system.

S13074: When a sum of S and N1 is greater than or equal to M, the BCU sends the first control indication information to the BMU correspondingly connected to the discharge-disabled battery pack, and then performs S13075. When the sum of S and N1 is less than M, performs 513076.

S13075: Perform off on the discharge-disabled battery pack, and perform connection on another battery pack.

After receiving the first control indication information, the BMU sends the first control signal to the first switch correspondingly connected to the discharge-disabled battery pack, and sends the second control signal to the second switch correspondingly connected to the discharge-disabled battery pack.

The first switch that receives the first control signal is turned off, and the second switch that receives the second control signal is turned on. In this way, a current in the energy storage system no longer flows through a corresponding battery pack, but flows to another battery pack through the second switch, so that the corresponding battery pack is off from the current path of the energy storage system.

After receiving the second control indication information, the BMU sends the second control signal to first switches correspondingly connected to battery packs other than the discharge-disabled battery pack in the energy storage system, and sends the first control signal to second switches correspondingly connected to the battery packs other than the discharge-disabled battery pack in the energy storage system.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system.

S13076: When a sum of S and N2 is greater than or equal to M, the BCU sends the first control indication information to the BMU correspondingly connected to the charge-disabled battery pack, and then performs S13077. When the sum of S and N2 is less than M, performs 513078.

S13077: Perform off on the charge-disabled battery pack, and perform connection on another battery pack.

After receiving the first control indication information, the BMU sends the first control signal to the first switch correspondingly connected to the charge-disabled battery pack, and sends the second control signal to the second switch correspondingly connected to the charge-disabled battery pack.

The first switch that receives the first control signal is turned off, and the second switch that receives the second control signal is turned on. In this way, a current in the energy storage system no longer flows through a corresponding battery pack, but flows to another battery pack through the second switch, so that the corresponding battery pack is off from the current path of the energy storage system.

After receiving the second control indication information, the BMU sends the second control signal to first switches correspondingly connected to battery packs other than the charge-disabled battery pack in the energy storage system, and sends the first control signal to second switches correspondingly connected to the battery packs other than the charge-disabled battery pack in the energy storage system.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system.

Optionally, in this embodiment, a sequence of steps S13074 and S13076 is not limited, and steps S13074 and S13076 may be performed in another sequence.

S13078: Perform off on all battery packs, and prompt that the system cannot perform charging or discharging.

When the foregoing conditions cannot be met, the BCU sends the second control indication information to the N BMUs. After receiving the second control indication information, the BMU sends the second control signal to first switches correspondingly connected to all the battery packs in the energy storage system, and sends the first control signal to second switches correspondingly connected to all the battery packs in the energy storage system.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system. Then, the BCU sends prompt information to the EMS, and the prompt information is displayed on an interface of an EMS, to notify a user that the energy storage system cannot perform charging or discharging.

According to the control method provided in this embodiment of this application, at a startup phase of the energy storage system, a corresponding charge-disabled battery pack or discharge-disabled battery pack is off based on a charge/discharge requirement of the system, to support system startup. If the charge/discharge requirement of the system is not clear, the system can be started based on a preset startup sequence to implement diversified startup. In addition, when a battery is abnormal, the battery can be off without affecting running of other battery packs.

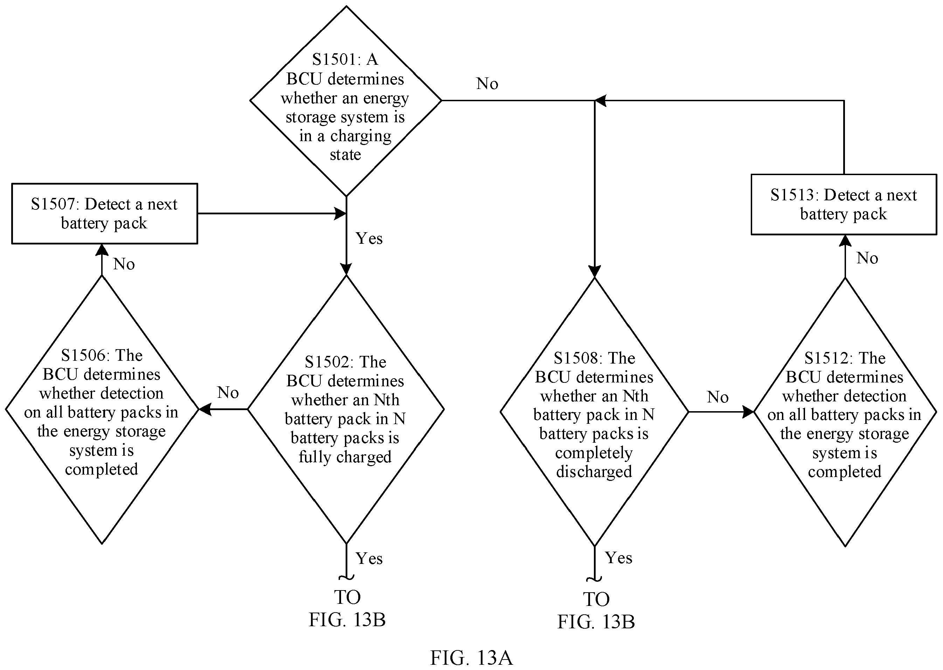

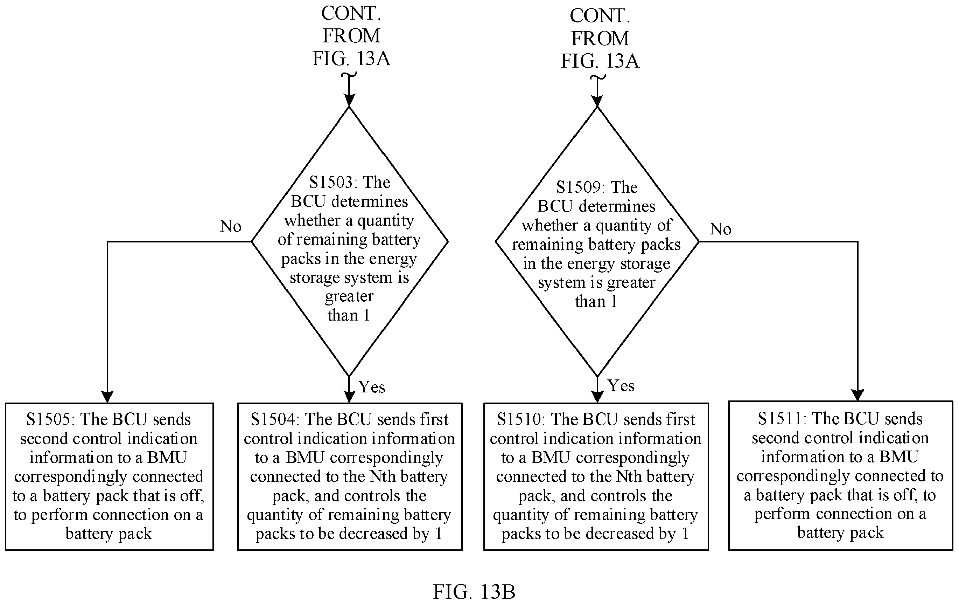

FIG. 13A and FIG. 13B are an example flowchart of a control method for an energy storage system at a running phase according to an embodiment of this application. The method is performed by a BCU, and may specifically include the following steps: S1501, S1502, S1503, S1504, S1505, S1506, S1507, S1508, S1509, S1510, S1511, S1512, and S1513.

After a startup phase of the energy storage system is complete, the energy storage system enters the running phase.

S1501: The BCU determines whether the energy storage system is in a charging state.

At the running phase of the energy storage system, the BCU determines, based on information such as a current value, a flow direction of a current, a voltage value, and a change of battery pack capacity in a current path in a running process of the energy storage system, whether the energy storage system is in a charging state at this time. If the energy storage system is in the charging state, perform S1502. If the energy storage system is not in the charging state, perform 51508.

S1502: The BCU determines whether an Nth battery pack in N battery packs is fully charged.

In a charging process of the energy storage system, the BCU sends an instruction to a correspondingly connected BMU of the Nth battery pack. The instruction is used for instructing the BMU to detect remaining power information of the correspondingly connected battery pack.

The BMU correspondingly connected to the Nth battery pack sends power indication information to the BCU. The power indication information indicates remaining power of the battery pack correspondingly connected to the BMU.

The BCU determines, based on the power indication information sent by the BMU, whether the remaining power of the Nth battery pack correspondingly connected to the BMU meets a first preset condition. If the remaining power of the Nth battery pack correspondingly connected to the BMU meets the first preset condition, the BCU may determine that the battery pack is a fully charged battery pack, and then perform S1503. If the remaining power of the Nth battery pack correspondingly connected to the BMU does not meet the first preset condition, perform S1506. The first preset condition includes being greater than or equal to a first preset power value. The first preset power value may be determined based on an SOC and an SCE of the battery pack, or may be determined based on a voltage of the battery pack.

S1503: The BCU determines whether a quantity of remaining battery packs in the energy storage system is greater than 1.

If the Nth battery pack in the N battery packs is fully charged, the BCU determines whether a quantity of remaining battery packs in the N battery packs is greater than 1. If the quantity of remaining battery packs in the N battery packs is greater than 1, perform S1504. If the quantity of remaining battery packs in the N battery packs is not greater than 1, perform 51505.

51504: The BCU sends first control indication information to a BMU correspondingly connected to the Nth battery pack, and controls the quantity of remaining battery packs to be decreased by 1.

The BCU sends the first control indication information to the BMU correspondingly connected to the Nth battery pack. The first control indication information indicates the BMU to perform off on the correspondingly connected Nth battery pack. After receiving the first control indication information, the BMU sends a first control signal to a correspondingly connected first switch, and sends a second control signal to a correspondingly connected second switch.

The first switch that receives the first control signal is turned off, and the second switch that receives the second control signal is turned on. In this way, a current in the energy storage system no longer flows through a corresponding battery pack, but flows to another battery pack through the second switch, so that the corresponding battery pack is off from the current path of the energy storage system.

The BCU controls the quantity of remaining battery packs in the energy storage system to be decreased by 1.

For example, if two battery packs remain after the quantity of remaining battery packs in the energy storage system is decreased by 1, that is, the quantity of remaining battery packs is still greater than 1, the execution may end, and the determining may be performed again from S1501. Alternatively, return to perform S1502 and perform next determining.

51505: The BCU sends second control indication information to a BMU correspondingly connected to a battery pack that is off, to perform connection on a battery pack.

If the BCU determines that the quantity of remaining battery packs in the energy storage system is 1, the BCU sends the second control indication information to the BMU correspondingly connected to the battery pack that is off. The second control indication information indicates the BMU to perform connection on the corresponding connected battery pack.

After receiving the second control indication information, the BMU sends the second control signal to the correspondingly connected first switch, and sends the first control signal to the correspondingly connected second switch.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system.

Optionally, battery packs that are off may be connected to in one by one, or a plurality or all of the battery packs that are off can be connected to at a time.

S1506: The BCU determines whether detection on all battery packs in the energy storage system is completed.

The BCU determines whether detection on all the battery packs in the energy storage system is completed. If detection is completed, end execution. If detection is not completed, perform S1507.

S1507: Detect a next battery pack.

S1508: The BCU determines whether an Nth battery pack in N battery packs is completely discharged.

In a discharging process of the energy storage system, the BCU sends an instruction to the correspondingly connected BMU of the Nth battery pack. The instruction is used for instructing the BMU to detect the remaining power information of the correspondingly connected battery pack.

The BMU correspondingly connected to the Nth battery pack sends the power indication information to the BCU. The power indication information indicates the remaining power of the battery pack correspondingly connected to the BMU.

The BCU determines, based on the power indication information sent by the BMU, whether the remaining power of the Nth battery pack correspondingly connected to the BMU meets a second preset condition. If the remaining power of the Nth battery pack correspondingly connected to the BMU meets the second preset condition, the BCU may determine that the battery pack is a completely discharged battery pack, and then perform S1509. If the remaining power of the Nth battery pack correspondingly connected to the BMU does not meet the second preset condition, perform S1512. The second preset condition includes being less than or equal to a second preset power value. The second preset power value may be determined based on an SOC and an SCE of the battery pack, or may be determined based on a voltage of the battery pack.

S1509: The BCU determines whether a quantity of remaining battery packs in the energy storage system is greater than 1.

If the Nth battery pack in the N battery packs is fully charged, the BCU determines whether the quantity of remaining battery packs in the N battery packs is greater than 1. If the quantity of remaining battery packs in the N battery packs is greater than 1, perform S1510. If the quantity of remaining battery packs in the N battery packs is not greater than 1, perform S1511.

S1510: The BCU sends first control indication information to a BMU correspondingly connected to the Nth battery pack, and controls the quantity of remaining battery packs to be decreased by 1.

The BCU sends the first control indication information to the BMU correspondingly connected to the Nth battery pack. The first control indication information indicates the BMU to perform off on the correspondingly connected Nth battery pack. After receiving the first control indication information, the BMU sends the first control signal to the correspondingly connected first switch, and sends the second control signal to the correspondingly connected second switch.

The first switch that receives the first control signal is turned off, and the second switch that receives the second control signal is turned on. In this way, a current in the energy storage system no longer flows through a corresponding battery pack, but flows to another battery pack through the second switch, so that the corresponding battery pack is off from the current path of the energy storage system.

The BCU controls the quantity of remaining battery packs in the energy storage system to be decreased by 1.

For example, if two battery packs remain after the quantity of remaining battery packs in the energy storage system is decreased by 1, that is, the quantity of remaining battery packs is still greater than 1, the execution may end, and the determining may be performed again from S1501. Alternatively, return to perform S1508 and perform next determining.

51511: The BCU sends second control indication information to a BMU correspondingly connected to a battery pack that is off, to perform connection on a battery pack.

If the BCU determines that the quantity of remaining battery packs in the energy storage system is 1, the BCU sends the second control indication information to the BMU correspondingly connected to the battery pack that is off. The second control indication information indicates the BMU to perform connection on the corresponding connected battery pack.

After receiving the second control indication information, the BMU sends the second control signal to the correspondingly connected first switch, and sends the first control signal to the correspondingly connected second switch.

The first switch that receives the second control signal is turned on, and the second switch that receives the first control signal is turned off. In this way, a current in the energy storage system flows through a corresponding battery pack, that is, flows to the battery pack through the first switch, so that the corresponding battery pack is connected to the current path of the energy storage system.

Optionally, battery packs that are off may be connected one by one, or a plurality or all of the battery packs that are off can be connected at a time.

S1512: The BCU determines whether detection on all battery packs in the energy storage system is completed.

The BCU determines whether detection on all the battery packs in the energy storage system is completed. If detection is completed, end execution. If detection is not completed, perform S1513.

S1513: Detect a next battery pack.

After the foregoing processing on the battery pack N ends, a status of the next battery pack is detected, whether discharging of the battery pack is completed is determined, and the foregoing process is repeated.

Optionally, when a battery pack is off or connected in a process of running, the battery pack may be off or connected online, and a DC/DC converter continues to run. Alternatively, the battery pack may be off or connected offline. The DC/DC converter first stops operating or shuts down, and then continues to run after the battery pack is connected or off.

Optionally, when the battery pack is off or connected, a current instruction may be first reduced, and then an action of connection or off is performed.

At the running phase of the energy storage system, a fully charged or completely discharged battery pack is off, and other battery packs continue to be charged and discharged. Finally, all the battery packs reach a same value. Then, when the energy storage system performs charging or discharging again, energy of the battery packs is the same. In this way, long power backup duration of the energy storage system can be implemented. In addition, after the fully charged or completely discharged battery pack is off, another battery pack in the energy storage system may still be charged or discharged at a maximum current without being affected by off of the battery pack. In this way, a problem that power is limited can be resolved.

In this embodiment of this application, that the BCU sends an instruction to the BMU to control connection or off of the battery pack is merely an example. This application is not limited thereto. For example, an EMS may alternatively be used for performing all or a part of the operations performed by the BCU in the foregoing method embodiments.

In this embodiment of this application, a method for controlling, by using the first switch and the second switch, a battery pack to be connected to or off from the N battery packs connected in series is merely an example. The method for performing connection or off on a battery pack in this application is not limited thereto.

Optionally, the energy storage system in this embodiment may further include a DC/DC. An input port (or referred to as an output port) of the DC/DC is connected to two ports of an energy storage rack that includes the N battery packs, and may receive a signal sent by the BCU.

Optionally, the energy storage system in this embodiment may further include a bus capacitor. The bus capacitor is connected to an output port (different from the port connected to the energy storage rack) of the DC/DC. Optionally, the energy storage system in this embodiment may further include a DC/AC. A port on one side of the DC/AC is connected to the bus capacitor, and a port on the other side is configured to connect to a power grid, a power generation system, or a load.

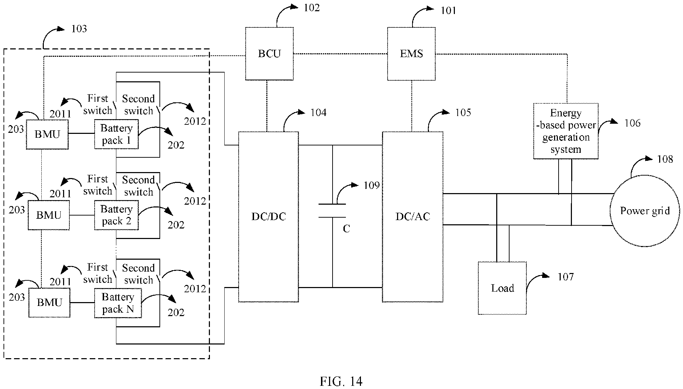

FIG. 14 is a schematic diagram of an architecture of an energy system according to an embodiment of this application. As shown in FIG. 14, the energy system includes an EMS 101, a BCU 102, an energy storage rack 103, a DC/DC converter 104, a DC/AC converter 105, an energy-based power generation system 106, a load 107, a power grid 108, and a bus capacitor 109. The energy storage rack 103 includes N first switches 2011, N second switches 2012, N BMUs 203, and N battery packs 202 connected in series. The N battery packs 202 are separately in a one-to-one correspondence with the N first switches 2011, the N second switches 2012, and the N BMUs 203. N is an integer greater than 1.

For related content of each unit in this embodiment, reference may be made to related content of a unit with a same reference sign in the accompanying drawings in any one of the foregoing embodiments. Details are not described herein again.

It may be understood that all or a part of the foregoing embodiments may be implemented by using software, hardware, firmware, or any combination thereof. When the software is used to implement the embodiments, all or a part of the foregoing embodiments may be implemented in a form of a computer program product. The computer program product includes one or more computer instructions or computer programs. When the program instructions or the computer programs are loaded and executed on a computer, the procedure or functions according to embodiments of this application are all or partially generated The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: only A exists, both A and B exist, and only B exists. A and B may be singular or plural. In addition, the character "/" in this specification usually represents an "or" relationship between the associated objects, or may indicate an "and/or" relationship. A specific meaning depends on a context.

In this application, "at least one" means one or more, and "a plurality of" means two or more. At least one of the following items (pieces) or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to a conventional technology, or the part of the technical solutions may be implemented in a form of a software product. The computer software product is stored in a storage medium, and includes several instructions for instructing a computer device (which may be a personal computer, a server, a network device, or the like) to perform all or a part of the steps of the methods in embodiments of this application. The foregoing storage medium includes any medium that can store program code, such as a USB flash drive, a removable hard disk, a read-only memory, a random access memory, a magnetic disk, or an optical disc.

## Claims

1. An energy storage system (200), wherein the energy storage system (200) comprises N switch units (201) and N battery packs (202) connected in series, the N switch units (201) are connected to two ends of the N battery packs (202) in a one-to-one correspondence, and N is an integer greater than 1, wherein
each of the N switch units (201) is configured to: when the energy storage system (200) is in a charging state and remaining power of a battery pack (202) correspondingly connected to each switch unit (201) meets a first preset condition, and/or when the energy storage system (200) is in a discharging state and the remaining power of the battery pack (202) correspondingly connected to each switch unit (201) meets a second preset condition, perform off processing on the battery pack (202) correspondingly connected to each switch unit (201), wherein the first preset condition comprises that the remaining power of the battery pack (202) correspondingly connected to each switch unit (201) being greater than or equal to a first preset power value, wherein the off processing comprises disconnecting a current path of the battery pack (202) correspondingly connected to each switch unit (201) and ensuring that a current path of the energy storage system (200) is connected, wherein the second preset condition comprises being less than or equal to a second preset power value, and the first preset power value is greater than the second preset power value,
wherein the energy storage system (200) further comprises N battery monitor units BMUs (203), and the N BMUs (203), the N battery packs (202), and the N switch units (201) are in a one-to-one correspondence with each other, wherein
each of the N BMUs (203) is configured to: monitor remaining power of a battery pack (202) correspondingly connected to each BMU (203), and when the energy storage system (200) is in a charging state and the remaining power of the battery pack (202) correspondingly connected to each BMU (203) meets the first preset condition, and/or when the energy storage system (200) is in a discharging state and the remaining power of the battery pack (202) correspondingly connected to each BMU (203) meets the second preset condition, send a control signal to a switch unit (201) correspondingly connected to each BMU (203), wherein the control signal is used for controlling the switch unit (201) correspondingly connected to each BMU (203) to perform the off processing on the battery pack (202) correspondingly connected to each BMU (203); and
each switch unit (201) is specifically configured to: receive the control signal sent by the BMU (203) correspondingly connected to each switch unit (201), and perform, under control of the control signal, the off processing on the battery pack (202) correspondingly connected to each switch unit (201),
wherein each of the N switch units (201) comprises a first switch and a second switch, wherein
each of the N battery packs (202) is connected in series to a first switch in a switch unit (201) correspondingly connected to each battery pack (202), to obtain a sub-circuit corresponding to each battery pack (202), a second switch in the switch unit correspondingly connected to each battery pack (202) is connected in parallel to the sub-circuit corresponding to each battery pack (202), and each BMU (203) is separately connected to a first switch and a second switch in the switch unit (201) correspondingly connected to each BMU (203);
each BMU (203) is specifically configured to: when the energy storage system (200) is in a charging state and the remaining power of the battery pack (202) correspondingly connected to each BMU (203) meets the first preset condition, and/or when the energy storage system (200) is in a discharging state and the remaining power of the battery pack (202) correspondingly connected to each BMU (203) meets the second preset condition, send a first control signal to the first switch in the switch unit (201) correspondingly connected to each BMU (203), and send a second control signal to the second switch in the switch unit (201) correspondingly connected to each BMU (203), wherein the first control signal is used for controlling a switch to be turned off, and the second control signal is used for controlling a switch to be turned on;
the first switch in each switch unit (201) is configured to: receive the first control signal sent by the BMU (203) correspondingly connected to each switch unit (201), and be turned off under control of the first control signal; and
the second switch in each switch unit (201) is configured to: receive the second control signal sent by the BMU (203) correspondingly connected to each switch unit (201), and be turned on under control of the second control signal,
wherein the energy storage system further (200) comprises a battery control unit BCU (102), and the BCU (102) is connected to each BMU (203), wherein
each BMU (203) is further configured to: send power indication information corresponding to each BMU (203) to the BCU (102), wherein the power indication information indicates the remaining power of the battery pack (202) correspondingly connected to each BMU (203);
the BCU (102) is configured to: receive the power indication information sent by each BMU (203), and determine, based on the power indication information, whether the remaining power of the battery pack (202) correspondingly connected to each BMU (203) meets the first preset condition or the second preset condition, when the remaining power of the battery pack (202) correspondingly connected to each BMU (203) meets the first preset condition and the energy storage system (200) is in a charging state, and/or when the remaining power of the battery pack (202) correspondingly connected to each BMU (203) meets the second preset condition and the energy storage system (200) is in a discharging state, send control indication information to each BMU (203), wherein the control indication information indicates the BMU (203) to control the correspondingly connected switch unit (201) to perform off processing on the correspondingly connected battery pack (202); and
each BMU (203) is specifically configured to: receive the control indication information sent by the BCU (102), and send, based on the control indication information, the first control signal to the first switch in the switch unit correspondingly connected to each BMU (203), and send the second control signal to the second switch in the switch unit (201) correspondingly connected to each BMU (203),
**characterized in that**
the BCU (102) is further configured to: determine, at a startup phase of the BCU (102), whether the energy storage system (200) needs to perform charging and whether the energy storage system needs to perform discharging,
and when the energy storage system (200) does not need to perform charging and does not need to perform discharging, determine whether a quantity S of operational battery packs in the N battery packs (202) is greater than or equal to a minimum quantity M of battery packs required for running the energy storage system (200),
wherein the operational battery packs comprise battery packs other than a charge-disabled battery pack, a discharge-disabled battery pack, and a faulty battery pack in the energy storage system;
and the charge-disabled battery pack comprises a battery pack whose remaining power is greater than or equal to the first preset power value, and the discharge-disabled battery pack comprises a battery pack whose remaining power is less than or equal to the second preset power value; and
the BCU (102) is further configured to: when S is greater than or equal to M, send the control indication information to BMUs (203) correspondingly connected to the charge-disabled battery pack and the discharge-disabled battery pack.

2. The energy storage system (200) according to claim 1, wherein the BCU (102) is further configured to: determine, at a startup phase of the BCU (102), whether the energy storage system (200) needs to perform charging, and when the energy storage system (200) needs to perform charging, send the control indication information to a BMU (203) correspondingly connected to a charge-disabled battery pack in the N battery packs.

3. The energy storage system (200) according to claim 1, wherein the BCU (103) is further configured to: determine, at a startup phase of the BCU (103), whether the energy storage system (200) needs to perform discharging, and when the energy storage system (200) needs to perform discharging, send the control indication information to a BMU (203) correspondingly connected to a discharge-disabled battery pack in the N battery packs.

4. The energy storage system (200) according to any of the claims 1 to 3, wherein the BCU (102) is further configured to: when S is less than M, determine whether a sum of S and a quantity N1 of charge-disabled battery packs in the energy storage system is greater than or equal to M, and when the sum of S and N1 is greater than or equal to M, send the control indication information to the BMU correspondingly connected to the discharge-disabled battery pack.

5. The energy storage system (200) according to any of the claims 1 to 4, wherein the BCU (102) is further configured to: when S is less than M, determine whether a sum of S and a quantity N2 of discharge-disabled battery packs in the energy storage system is greater than or equal to M, and when the sum of S and N2 is greater than or equal to M, send the control indication information to the BMU correspondingly connected to the charge-disabled battery pack.

6. A control method for an energy storage system, wherein the energy storage system comprises a battery control unit BCU, N battery monitor units BMUs, N switch units, and N battery packs connected in series, the N BMUs, the N battery packs, and the N switch units are in a one-to-one correspondence with each other, N is an integer greater than 1, and the control method comprises:
receiving (S901), by the BCU, power indication information sent by each BMU;
determining (S902), by the BCU based on the power indication information, whether remaining power of a battery pack correspondingly connected to each BMU meets a first preset condition or a second preset condition; and
when (S903) the remaining power of the battery pack correspondingly connected to each BMU meets the first preset condition and the energy storage system is in a charging state, and/or when the remaining power of the battery pack correspondingly connected to each BMU meets the second preset condition and the energy storage system is in a discharging state, sending, by the BCU, control indication information to each BMU, wherein the power indication information indicates the remaining power of the battery pack correspondingly connected to each BMU, wherein the control indication information indicates the BMU to control a correspondingly connected switch unit to perform off processing on the correspondingly connected battery pack, wherein the off processing comprises disconnecting a current path of a battery pack correspondingly connected to each switch unit and ensuring that a current path of the energy storage system is connected,
monitoring, by each of the N BMUs, remaining power of a battery pack correspondingly connected to each BMU, and when (S904) the energy storage system is in a charging state and the remaining power of the battery pack correspondingly connected to each BMU meets the first preset condition, and/or when the energy storage system is in a discharging state and the remaining power of the battery pack correspondingly connected to each BMU meets the second preset condition, sending a control signal to a switch unit correspondingly connected to each BMU, wherein the control signal is used for controlling the switch unit correspondingly connected to each BMU to perform the off processing on the battery pack correspondingly connected to each BMU; and
receiving, by each switch units, the control signal sent by the BMU correspondingly connected to each switch unit, and performing, under control of the control signal, the off processing on the battery pack correspondingly connected to each switch unit,
wherein each of the N switch units comprises a first switch and a second switch,
wherein each of the N battery packs is connected in series to a first switch in a switch unit correspondingly connected to each battery pack, to obtain a sub-circuit corresponding to each battery pack, a second switch in the switch unit correspondingly connected to each battery pack is connected in parallel to the sub-circuit corresponding to each battery pack, and each BMU is separately connected to a first switch and a second switch in the switch unit correspondingly connected to each BMU;
when the energy storage system is in a charging state and the remaining power of the battery pack correspondingly connected to each BMU meets the first preset condition, and/or when the energy storage system is in a discharging state and the remaining power of the battery pack correspondingly connected to each BMU meets the second preset condition, sending, by each BMU, a first control signal to the first switch in the switch unit correspondingly connected to each BMU, and sending a second control signal to the second switch in the switch unit correspondingly connected to each BMU, wherein the first control signal is used for controlling a switch to be turned off, and the second control signal is used for controlling a switch to be turned on;
the first switch in each switch unit is configured to: receive the first control signal sent by the BMU correspondingly connected to each switch unit, and be turned off under control of the first control signal; and
the second switch in each switch unit is configured to: receive the second control signal sent by the BMU correspondingly connected to each switch unit, and be turned on under control of the second control signal,
wherein the energy storage system further comprises a battery control unit BCU, and the BCU is connected to each BMU,
sending power indication information corresponding to each BMU to the BCU, by each BMU, wherein the power indication information indicates the remaining power of the battery pack correspondingly connected to each BMU;
receiving the power indication information sent by each BMU, by the BCU, and determining, based on the power indication information, whether the remaining power of the battery pack correspondingly connected to each BMU meets the first preset condition or the second preset condition, when the remaining power of the battery pack correspondingly connected to each BMU meets the first preset condition and the energy storage system is in a charging state, and/or when the remaining power of the battery pack correspondingly connected to each BMU meets the second preset condition and the energy storage system is in a discharging state, send control indication information to each BMU, wherein the control indication information indicates the BMU to control the correspondingly connected switch unit to perform off processing on the correspondingly connected battery pack; and
receive, by each BMU, the control indication information sent by the BCU, and sending, based on the control indication information, the first control signal to the first switch in the switch unit correspondingly connected to each BMU, and send the second control signal to the second switch in the switch unit correspondingly connected to each BMU, **characterized in**
determining, by the BCU, at a startup phase of the BCU, whether the energy storage system needs to perform charging and whether the energy storage system needs to perform discharging,
and when the energy storage system does not need to perform charging and does not need to perform discharging, determining whether a quantity S of operational battery packs in the N battery packs is greater than or equal to a minimum quantity M of battery packs required for running the energy storage system,
wherein the operational battery packs comprise battery packs other than a charge-disabled battery pack, a discharge-disabled battery pack, and a faulty battery pack in the energy storage system;
and the charge-disabled battery pack comprises a battery pack whose remaining power is greater than or equal to the first preset power value, and the discharge-disabled battery pack comprises a battery pack whose remaining power is less than or equal to the second preset power value; and
when S is greater than or equal to M, sending, by the BCU, the control indication information to BMUs correspondingly connected to the charge-disabled battery pack and the discharge-disabled battery pack.

7. The control method according to claim 6, wherein the method further comprises:
determining (S1301), by the BCU at a startup phase of the BCU, whether the energy storage system needs to perform charging; and
when the energy storage system needs to perform charging, sending, by the BCU, the control indication information to a BMU correspondingly connected to a charge-disabled battery pack in the N battery packs.

8. The control method according to claim 6, wherein the method further comprises:
determining (S1304), by the BCU at a startup phase of the BCU, whether the energy storage system needs to perform discharging; and
when the energy storage system needs to perform discharging, sending, by the BCU, the control indication information to a BMU correspondingly connected to a discharge-disabled battery pack in the N battery packs.

9. The control method according to claim 6, wherein the method further comprises:
determining (S1301, 1304), by the BCU at a startup phase of the BCU, whether the energy storage system needs to perform charging and whether the energy storage system needs to perform discharging;
when the energy storage system does not need to perform charging and does not need to perform discharging, determining, by the BCU, whether a quantity S of operational battery packs in the N battery packs is greater than or equal to a minimum quantity M of battery packs required for running the energy storage system, wherein the operational battery packs comprise battery packs other than a charge-disabled battery pack, a discharge-disabled battery pack, and a faulty battery pack in the energy storage system; and the charge-disabled battery pack comprises a battery pack whose remaining power is greater than or equal to the first preset power value, and the discharge-disabled battery pack comprises a battery pack whose remaining power is less than or equal to the second preset power value; and
when S is greater than or equal to M, sending, by the BCU, the control indication information to BMUs correspondingly connected to the charge-disabled battery pack and the discharge-disabled battery pack.

10. The control method according to claim 9, wherein the method further comprises:
when S is less than M, determining, by the BCU, whether a sum of S and a quantity N1 of charge-disabled battery packs in the energy storage system is greater than or equal to M; and
when the sum of S and N1 is greater than or equal to M, sending, by the BCU, the control indication information to the BMU correspondingly connected to the discharge-disabled battery pack.

11. The control method according to claim 9, wherein the method further comprises:
when S is less than M, determining, by the BCU, whether a sum of S and a quantity N2 of discharge-disabled battery packs in the energy storage system is greater than or equal to M; and
when the sum of S and N2 is greater than or equal to M, sending, by the BCU, the control indication information to the BMU correspondingly connected to the charge-disabled battery pack.

## Patentansprüche

1. Energiespeichersystem (200), wobei das Energiespeichersystem (200) N Schaltereinheiten (201) und N Akkupacks (202) umfasst, die in Reihe geschaltet sind, wobei die N Schaltereinheiten (201) mit zwei Enden der N Akkupacks (202) in einer Eins-zu-Eins-Entsprechung verbunden sind und N eine ganze Zahl größer als 1 ist, wobei
jede der N Schaltereinheiten (201) konfiguriert ist zum: wenn das Energiespeichersystem (200) in einem Ladezustand ist und eine verbleibende Leistung eines Akkupacks (202), der mit jeder Schaltereinheit (201) entsprechend verbunden ist, eine erste voreingestellte Bedingung erfüllt, und/oder wenn das Energiespeichersystem (200) in einem Entladezustand ist und die verbleibende Leistung des Akkupacks (202), der mit jeder Schaltereinheit (201) entsprechend verbunden ist, eine zweite voreingestellte Bedingung erfüllt, Durchführen eines Aus-Verarbeitens an dem Akkupack (202), der mit jeder Schaltereinheit (201) entsprechend verbunden ist, wobei die erste voreingestellte Bedingung umfasst, dass die verbleibende Leistung des Akkupacks (202), der mit jeder Schaltereinheit (201) entsprechend verbunden ist, größer als oder gleich einem ersten voreingestellten Leistungswert ist, wobei das Aus-Verarbeiten ein Trennen eines aktuellen Pfads des Akkupacks (202), der mit jeder Schaltereinheit (201) entsprechend verbunden ist, und ein Sicherstellen, dass ein aktueller Pfad des Energiespeichersystems (200) verbunden ist, umfasst, wobei die zweite voreingestellte Bedingung umfasst, kleiner als oder gleich einem zweiten voreingestellten Leistungswert zu sein, und der erste voreingestellte Leistungswert größer als der zweite voreingestellte Leistungswert ist, wobei das Energiespeichersystem (200) ferner N Akkuüberwachungseinheiten BMUs (203) umfasst, und die N BMUs (203), die N Akkupacks (202) und die N Schaltereinheiten (201) in einer Eins-zu-Eins-Entsprechung zueinander sind, wobei jede der N BMUs (203) konfiguriert ist zum: Überwachen von verbleibender Leistung eines Akkupacks (202), der mit jeder BMU (203) entsprechend verbunden ist, und wenn das Energiespeichersystem (200) in einem Ladezustand ist und die verbleibende Leistung des Akkupacks (202), der mit jeder BMU (203) entsprechend verbunden ist, die erste voreingestellte Bedingung erfüllt, und/oder wenn das Energiespeichersystem (200) in einem Entladezustand ist und die verbleibende Leistung des Akkupacks (202), der mit jeder BMU (203) entsprechend verbunden ist, die zweite voreingestellte Bedingung erfüllt, Senden eines Steuersignals an eine Schaltereinheit (201), die mit jeder BMU (203) entsprechend verbunden ist, wobei das Steuersignal zum Steuern der Schaltereinheit (201), die mit jeder BMU (203) entsprechend verbunden ist, verwendet wird, um das Aus-Verarbeiten an dem Akkupack (202), der mit jeder BMU (203) entsprechend verbunden ist, durchzuführen; und
jede Schaltereinheit (201) speziell konfiguriert ist zum: Empfangen des Steuersignals, das durch die BMU (203), die mit jeder Schaltereinheit (201) entsprechend verbunden ist, gesendet wird, und Durchführen, unter Steuerung des Steuersignals, des Aus-Verarbeitens an dem Akkupack (202), der mit jeder Schaltereinheit (201) entsprechend verbunden ist,
wobei jede der N Schaltereinheiten (201) einen ersten Schalter und einen zweiten Schalter umfasst, wobei
jeder der N Akkupacks (202) mit einem ersten Schalter in einer Schaltereinheit (201), die mit jedem Akkupack (202) entsprechend verbunden ist, in Reihe geschaltet ist, um einen Teilkreis zu erhalten, der jedem Akkupack (202) entspricht, ein zweiter Schalter in der Schaltereinheit, die mit jedem Akkupack (202) entsprechend verbunden ist, mit dem Teilkreis, der jedem Akkupack (202) entspricht, parallel geschaltet ist, und jede BMU (203) mit einem ersten Schalter und einem zweiten Schalter in der Schaltereinheit (201), die mit jeder BMU (203) entsprechend verbunden ist, separat verbunden ist;
jede BMU (203) speziell konfiguriert ist zum: wenn das Energiespeichersystem (200) in einem Ladezustand ist und die verbleibende Leistung des Akkupacks (202), der mit jeder BMU (203) entsprechend verbunden ist, die erste voreingestellte Bedingung erfüllt, und/oder wenn das Energiespeichersystem (200) in einem Entladezustand ist und die verbleibende Leistung des Akkupacks (202), der mit jeder BMU (203) entsprechend verbunden ist, die zweite voreingestellte Bedingung erfüllt, Senden eines ersten Steuersignals an den ersten Schalter in der Schaltereinheit (201), die mit jeder BMU (203) entsprechend verbunden ist, und Senden eines zweiten Steuersignals an den zweiten Schalter in der Schaltereinheit (201), die mit jeder BMU (203) entsprechend verbunden ist, wobei das erste Steuersignal zum Steuern eines Schalters, um ausgeschaltet zu werden, verwendet wird, und das zweite Steuersignal zum Steuern eines Schalters, um eingeschaltet zu werden, verwendet wird;
der erste Schalter in jeder Schaltereinheit (201) konfiguriert ist zum: Empfangen des ersten Steuersignals, das durch die BMU (203), die mit jeder Schaltereinheit (201) entsprechend verbunden ist, gesendet wird, und Ausgeschaltetwerden unter Steuerung des ersten Steuersignals; und
der zweite Schalter in jeder Schaltereinheit (201) konfiguriert ist zum: Empfangen des zweiten Steuersignals, das durch die BMU (203), die mit jeder Schaltereinheit (201) entsprechend verbunden ist, gesendet wird, und Eingeschaltetwerden unter Steuerung des zweiten Steuersignals,
wobei das Energiespeichersystem ferner (200) eine Akkusteuereinheit BCU (102) umfasst und die BCU (102) mit jeder BMU (203) verbunden ist, wobei jede BMU (203) ferner konfiguriert ist zum: Senden von Leistungsanzeigeinformationen, die jeder BMU (203) entsprechen, an die BCU (102), wobei die Leistungsanzeigeinformationen die verbleibende Leistung des Akkupacks (202), der mit jeder BMU (203) entsprechend verbunden ist, anzeigen;
die BCU (102) konfiguriert ist zum: Empfangen der Leistungsanzeigeinformationen, die durch jede BMU (203) gesendet werden, und Bestimmen, basierend auf den Leistungsanzeigeinformationen, ob die verbleibende Leistung des Akkupacks (202), der mit jeder BMU (203) entsprechend verbunden ist, die erste voreingestellte Bedingung oder die zweite voreingestellte Bedingung erfüllt, wenn die verbleibende Leistung des Akkupacks (202), der mit jeder BMU (203) entsprechend verbunden ist, die erste voreingestellte Bedingung erfüllt und das Energiespeichersystem (200) in einem Ladezustand ist, und/oder wenn die verbleibende Leistung des Akkupacks (202), der mit jeder BMU (203) entsprechend verbunden ist, die zweite voreingestellte Bedingung erfüllt und das Energiespeichersystem (200) in einem Entladezustand ist, Senden von Steueranzeigeinformationen an jede BMU (203), wobei die Steueranzeigeinformationen der BMU (203) anzeigen, die entsprechend verbundene Schaltereinheit (201) zu steuern, um das Aus-Verarbeiten an dem entsprechend verbundenen Akkupack (202) durchzuführen; und
jede BMU (203) speziell konfiguriert ist zum: Empfangen der Steueranzeigeinformationen, die durch die BCU (102) gesendet werden, und Senden, basierend auf den Steueranzeigeinformationen, des ersten Steuersignals an den ersten Schalter in der Schaltereinheit, die mit jeder BMU (203) entsprechend verbunden ist, und Senden des zweiten Steuersignals an den zweiten Schalter in der Schaltereinheit (201), die mit jeder BMU (203) entsprechend verbunden ist,
**dadurch gekennzeichnet, dass**
die BCU (102) ferner konfiguriert ist zum: Bestimmen, in einer Startphase der BCU (102), ob das Energiespeichersystem (200) das Laden durchführen muss und ob das Energiespeichersystem das Entladen durchführen muss,
und wenn das Energiespeichersystem (200) das Laden nicht durchführen muss und das Entladen nicht durchführen muss, Bestimmen, ob eine Menge S von betriebsfähigen Akkupacks in den N Akkupacks (202) größer als oder gleich einer Mindestmenge M von Akkupacks ist, die zum Ausführen des Energiespeichersystems (200) erforderlich ist,
wobei die betriebsfähigen Akkupacks andere Akkupacks als einen ladungsdeaktivierten Akkupack, einen entladungsdeaktivierten Akkupack und einen fehlerhaften Akkupack in dem Energiespeichersystem umfassen;
und der ladungsdeaktivierte Akkupack einen Akkupack umfasst, dessen verbleibende Leistung größer als oder gleich dem ersten voreingestellten Leistungswert ist, und der entladungsdeaktivierte Akkupack ein Akkupack umfasst, dessen verbleibende Leistung kleiner als oder gleich dem zweiten voreingestellten Leistungswert ist; und
die BCU (102) ferner konfiguriert ist zum: wenn S größer als oder gleich M ist, Senden der Steueranzeigeinformationen an BMUs (203), die mit dem ladungsdeaktivierten Akkupack und dem entladungsdeaktivierten Akkupack entsprechend verbunden sind.

2. Energiespeichersystem (200) nach Anspruch 1, wobei die BCU (102) ferner konfiguriert ist zum: Bestimmen, in einer Startphase der BCU (102), ob das Energiespeichersystem (200) das Laden durchführen muss, und wenn das Energiespeichersystem (200) das Laden durchführen muss, Senden der Steueranzeigeinformationen an eine BMU (203), die mit einem ladungsdeaktivierten Akkupack in den N Akkupacks entsprechend verbunden ist.

3. Energiespeichersystem (200) nach Anspruch 1, wobei die BCU (103) ferner konfiguriert ist zum: Bestimmen, in einer Startphase der BCU (103), ob das Energiespeichersystem (200) das Entladen durchführen muss, und wenn das Energiespeichersystem (200) das Entladen durchführen muss, Senden der Steueranzeigeinformationen an eine BMU (203), die mit einem entladungsdeaktivierten Akkupack in den N Akkupacks entsprechend verbunden ist.

4. Energiespeichersystem (200) nach einem der Ansprüche 1 bis 3, wobei die BCU (102) ferner konfiguriert ist zum: wenn S kleiner als M ist, Bestimmen, ob eine Summe von S und einer Menge N1 von ladungsdeaktivierten Akkupacks in dem Energiespeichersystem größer als oder gleich M ist, und wenn die Summe von S und N1 größer als oder gleich M ist, Senden der Steueranzeigeinformationen an die BMU, die mit dem entladungsdeaktivierten Akkupack entsprechend verbunden ist.

5. Energiespeichersystem (200) nach einem der Ansprüche 1 bis 4, wobei die BCU (102) ferner konfiguriert ist zum: wenn S kleiner als M ist, Bestimmen, ob eine Summe von S und einer Menge N2 von entladungsdeaktivierten Akkupacks in dem Energiespeichersystem größer als oder gleich M ist, und wenn die Summe von S und N2 größer als oder gleich M ist, Senden der Steueranzeigeinformationen an die BMU, die mit dem ladungsdeaktivierten Akkupack entsprechend verbunden ist.

6. Steuerverfahren für ein Energiespeichersystem, wobei das Energiespeichersystem eine Akkusteuereinheit BCU, N Akkuüberwachungseinheiten BMUs, N Schaltereinheiten und N Akkupacks, die in Reihe geschaltet sind, umfasst, wobei die N BMUs, die N Akkupacks und die N Schaltereinheiten in einer Eins-zu-Eins-Entsprechung zueinander sind, N eine ganze Zahl größer als 1 ist, und das Steuerverfahren umfasst:
Empfangen (S901), durch die BCU, von Leistungsanzeigeinformationen, die durch jede BMU gesendet werden;
Bestimmen (S902), durch die BCU basierend auf den Leistungsanzeigeinformationen, ob verbleibende Leistung eines Akkupacks, der mit jeder BMU entsprechend verbunden ist, eine erste voreingestellte Bedingung oder eine zweite voreingestellte Bedingung erfüllt; und
wenn (S903) die verbleibende Leistung des Akkupacks, der mit jeder BMU entsprechend verbunden ist, die erste voreingestellte Bedingung erfüllt und das Energiespeichersystem in einem Ladezustand ist, und/oder wenn die verbleibende Leistung des Akkupacks, der mit jeder BMU entsprechend verbunden ist, die zweite voreingestellte Bedingung erfüllt und das Energiespeichersystem in einem Entladezustand ist, Senden, durch die BCU, von Steueranzeigeinformationen an jede BMU, wobei die Leistungsanzeigeinformationen die verbleibende Leistung des Akkupacks, der mit jeder BMU entsprechend verbunden ist, anzeigen, wobei die Steueranzeigeinformationen die BMU anzeigen, um eine entsprechend verbundene Schaltereinheit zu steuern, um das Aus-Verarbeiten an dem entsprechend verbundenen Akkupack durchzuführen, wobei das Aus-Verarbeiten das Trennen eines aktuellen Pfads eines Akkupacks, der mit jeder Schaltereinheit entsprechend verbunden ist, und das Sicherstellen, dass ein aktueller Pfad des Energiespeichersystems verbunden ist, umfasst,
Überwachen, durch jede der N BMUs, von verbleibender Leistung eines Akkupacks, der mit jeder BMU entsprechend verbunden ist, und wenn (S904) das Energiespeichersystem in einem Ladezustand ist und die verbleibende Leistung des Akkupacks, der mit jeder BMU entsprechend verbunden ist, die erste voreingestellte Bedingung erfüllt, und/oder wenn das Energiespeichersystem in einem Entladezustand ist und die verbleibende Leistung des Akkupacks, der mit jeder BMU entsprechend verbunden ist, die zweite voreingestellte Bedingung erfüllt, Senden eines Steuersignal an eine Schaltereinheit, die mit jeder BMU entsprechend verbunden ist, wobei das Steuersignal zum Steuern der Schaltereinheit, die mit jeder BMU entsprechend verbunden ist, verwendet wird, um das Aus-Verarbeiten an dem Akkupack, der mit jeder BMU entsprechend verbunden ist, durchzuführen; und
Empfangen, durch jede Schaltereinheiten, des Steuersignals, das durch die BMU, die mit jeder Schaltereinheit entsprechend verbunden ist, gesendet wird, und Durchführen, unter Steuerung des Steuersignals, des Aus-Verarbeitens an dem Akkupack, der mit jeder Schaltereinheit entsprechend verbunden ist,
wobei jede der N Schaltereinheiten einen ersten Schalter und einen zweiten Schalter umfasst,
wobei jeder der N Akkupacks mit einem ersten Schalter in einer Schaltereinheit, die mit jedem Akkupack entsprechend verbunden ist, in Reihe geschaltet ist, um einen Teilkreis zu erhalten, der jedem Akkupack entspricht, ein zweiter Schalter in der Schaltereinheit, die mit jedem Akkupack entsprechend verbunden ist, mit dem Teilkreis, der jedem Akkupack entspricht, parallel geschaltet ist und jede BMU mit einem ersten Schalter und einem zweiten Schalter in der Schaltereinheit, die mit jeder BMU entsprechend verbunden ist, separat verbunden ist;
wenn das Energiespeichersystem in einem Ladezustand ist und die verbleibende Leistung des Akkupacks, der mit jeder BMU entsprechend verbunden ist, die erste voreingestellte Bedingung erfüllt, und/oder wenn das Energiespeichersystem in einem Entladezustand ist und die verbleibende Leistung des Akkupacks, der mit jeder BMU entsprechend verbunden ist, die zweite voreingestellte Bedingung erfüllt, Senden, durch jede BMU, eines ersten Steuersignals an den ersten Schalter in der Schaltereinheit, die mit jeder BMU entsprechend verbunden ist, und Senden eines zweiten Steuersignals an den zweiten Schalter in der Schaltereinheit, die mit jeder BMU entsprechend verbunden ist, wobei das erste Steuersignal zum Steuern eines Schalters, um ausgeschaltet zu werden, verwendet wird, und das zweite Steuersignal zum Steuern eines Schalters, um eingeschaltet zu werden, verwendet wird;
der erste Schalter in jeder Schaltereinheit konfiguriert ist zum: Empfangen des ersten Steuersignals, das durch die BMU, die mit jeder Schaltereinheit entsprechend verbunden ist, gesendet wird, und Ausgeschaltetwerden unter Steuerung des ersten Steuersignals; und
der zweite Schalter in jeder Schaltereinheit konfiguriert ist zum: Empfangen des zweiten Steuersignals, das durch die BMU, die mit jeder Schaltereinheit entsprechend verbunden ist, gesendet wird, und Eingeschaltetwerden unter Steuerung des zweiten Steuersignals,
wobei das Energiespeichersystem ferner eine Akkusteuereinheit BCU umfasst und die BCU mit jeder BMU verbunden ist,
Senden von Leistungsanzeigeinformationen, die jeder BMU entsprechen, an die BCU, durch jede BMU, wobei die Leistungsanzeigeinformationen die verbleibende Leistung des Akkupacks, der mit jeder BMU entsprechend verbunden ist, anzeigen;
Empfangen der Leistungsanzeigeinformationen, die durch jede BMU gesendet werden, durch die BCU, und Bestimmen, basierend auf den Leistungsanzeigeinformationen, ob die verbleibende Leistung des Akkupacks, der mit jeder BMU entsprechend verbunden ist, die erste voreingestellte Bedingung oder die zweite voreingestellte Bedingung erfüllt, wenn die verbleibende Leistung des Akkupacks, der mit jeder BMU entsprechend verbunden ist, die erste voreingestellte Bedingung erfüllt und das Energiespeichersystem in einem Ladezustand ist, und/oder wenn die verbleibende Leistung des Akkupacks, der mit jeder BMU entsprechend verbunden ist, die zweite voreingestellte Bedingung erfüllt und das Energiespeichersystem in einem Entladezustand ist, Senden von Steueranzeigeinformationen an jede BMU, wobei die Steueranzeigeinformationen der BMU anzeigen, die entsprechend verbundene Schaltereinheit zu steuern, um das Aus-Verarbeiten an dem entsprechend verbundenen Akkupack durchzuführen; und
Empfangen, durch jede BMU, der Steueranzeigeinformationen, die durch die BCU gesendet werden, und Senden, basierend auf den Steueranzeigeinformationen, des ersten Steuersignals an den ersten Schalter in der Schaltereinheit, die mit jeder BMU entsprechend verbunden ist, und Senden des zweiten Steuersignals an den zweiten Schalter in der Schaltereinheit, die mit jeder BMU entsprechend verbunden ist,
**gekennzeichnet durch**
Bestimmen, durch die BCU, in einer Startphase der BCU, ob das Energiespeichersystem das Laden durchführen muss und ob das Energiespeichersystem Entladen durchführen muss,
und wenn das Energiespeichersystem das Laden nicht durchführen muss und das Entladen nicht durchführen muss, Bestimmen, ob eine Menge S von betriebsfähigen Akkupacks in den N Akkupacks größer als oder gleich einer Mindestmenge M von Akkupacks ist, die zum Ausführen des Energiespeichersystems erforderlich sind, wobei die betriebsfähigen Akkupacks andere Akkupacks als einen ladungsdeaktivierten Akkupack, einen entladungsdeaktivierten Akkupack und einen fehlerhaften Akkupack in dem Energiespeichersystem umfassen;
und der ladungsdeaktivierte Akkupack einen Akkupack umfasst, dessen verbleibende Leistung größer als oder gleich dem ersten voreingestellten Leistungswert ist, und der entladungsdeaktivierte Akkupack ein Akkupack umfasst, dessen verbleibende Leistung kleiner als oder gleich dem zweiten voreingestellten Leistungswert ist; und
wenn S größer als oder gleich M ist, Senden, durch die BCU, der Steueranzeigeinformationen an BMUs, die mit dem ladungsdeaktivierten Akkupack und dem entladungsdeaktivierten Akkupack entsprechend verbunden sind.

7. Steuerverfahren nach Anspruch 6, wobei das Verfahren ferner umfasst:
Bestimmen (S1301), durch die BCU in einer Startphase der BCU, ob das Energiespeichersystem das Laden durchführen muss; und
wenn das Energiespeichersystem das Laden durchführen muss, Senden, durch die BCU, der Steueranzeigeinformation an eine BMU, die mit einem ladungsdeaktivierten Akkupack in den N Akkupacks entsprechend verbunden ist.

8. Steuerverfahren nach Anspruch 6, wobei das Verfahren ferner umfasst:
Bestimmen (S1304), durch die BCU in einer Startphase der BCU, ob das Energiespeichersystem das Entladen durchführen muss; und
wenn das Energiespeichersystem das Entladen durchführen muss, Senden, durch die BCU, der Steueranzeigeinformationen an eine BMU, die mit einem entladungsdeaktivierten Akkupack in den N Akkupacks entsprechend verbunden ist.

9. Steuerverfahren nach Anspruch 6, wobei das Verfahren ferner umfasst:
Bestimmen (S1301, 1304), durch die BCU in einer Startphase der BCU, ob das Energiespeichersystem das Laden durchführen muss und ob das Energiespeichersystem das Entladen durchführen muss;
und wenn das Energiespeichersystem das Laden nicht durchführen muss und das Entladen nicht durchführen muss, Bestimmen, durch die BCU, ob eine Menge S von betriebsfähigen Akkupacks in den N Akkupacks größer als oder gleich einer Mindestmenge M von Akkupacks ist, die zum Ausführen des Energiespeichersystems erforderlich sind, wobei die betriebsfähigen Akkupacks andere Akkupacks als einen ladungsdeaktivierten Akkupack, einen entladungsdeaktivierten Akkupack und einen fehlerhaften Akkupack in dem Energiespeichersystem umfassen; und der ladungsdeaktivierte Akkupack einen Akkupack umfasst, dessen verbleibende Leistung größer als oder gleich dem ersten voreingestellten Leistungswert ist, und der entladungsdeaktivierte Akkupack ein Akkupack umfasst, dessen verbleibende Leistung kleiner als oder gleich dem zweiten voreingestellten Leistungswert ist; und
wenn S größer als oder gleich M ist, Senden, durch die BCU, der Steueranzeigeinformationen an BMUs, die mit dem ladungsdeaktivierten Akkupack und dem entladungsdeaktivierten Akkupack entsprechend verbunden sind.

10. Steuerverfahren nach Anspruch 9, wobei das Verfahren ferner umfasst:
wenn S kleiner als M ist, Bestimmen, durch die BCU, ob eine Summe von S und einer Menge N1 von ladungsdeaktivierten Akkupacks in dem Energiespeichersystem größer als oder gleich M ist; und
wenn die Summe von S und N1 größer als oder gleich M ist, Senden, durch die BCU, der Steueranzeigeinformationen an die BMU, die mit dem entladungsdeaktivierten Akkupack entsprechend verbunden ist.

11. Steuerverfahren nach Anspruch 9, wobei das Verfahren ferner umfasst:
wenn S kleiner als M ist, Bestimmen, durch die BCU, ob eine Summe von S und einer Menge N2 von entladungsdeaktivierten Akkupacks in dem Energiespeichersystem größer als oder gleich M ist; und
wenn die Summe von S und N2 größer als oder gleich M ist, Senden, durch die BCU, der Steueranzeigeinformationen an die BMU, die mit dem ladungsdeaktivierten Akkupack entsprechend verbunden ist.

## Revendications

1. Système de stockage d'énergie (200), dans lequel le système de stockage d'énergie (200) comprend N unités de commutation (201) et N blocs-batteries (202) connectés en série, les N unités de commutation (201) étant connectées à deux extrémités des N blocs-batteries (202) dans une correspondance biunivoque, et N étant un entier supérieur à 1, dans lequel
chacune des N unités de commutation (201) est configurée pour : lorsque le système de stockage d'énergie (200) est dans un état de charge et que la puissance restante d'un bloc-batterie (202) connecté de façon correspondante à chaque unité de commutation (201) satisfait à une première condition prédéfinie, et/ou lorsque le système de stockage d'énergie (200) est dans un état de décharge et que la puissance restante du bloc-batterie (202) connecté de façon correspondante à chaque unité de commutation (201) satisfait à une seconde condition prédéfinie, effectuer un traitement hors tension sur le bloc-batterie (202) connecté de façon correspondante à chaque unité de commutation (201), dans lequel la première condition prédéfinie comprend que la puissance restante du bloc-batterie (202) connectée de façon correspondante à chaque unité de commutation (201) est supérieure ou égale à une première valeur de puissance prédéfinie, dans lequel le traitement de désactivation comprend la déconnexion d'un chemin de courant du bloc-batterie (202) connecté de façon correspondante à chaque unité de commutation (201) et le fait de garantir qu'un chemin de courant du système de stockage d'énergie (200) est connecté, dans lequel la seconde condition prédéfinie comprend une valeur inférieure ou égale à une seconde valeur de puissance prédéfinie, et la première valeur de puissance prédéfinie est supérieure à la seconde valeur de puissance prédéfinie,
dans lequel le système de stockage d'énergie (200) comprend en outre N unités de surveillance de batterie, BMU (203), et les N BMU (203), les N blocs-batteries (202) et les N unités de commutation (201) sont en correspondance biunivoque les uns avec les autres, dans lequel
chacune des N MMU (203) est configurée pour : surveiller l'énergie restante d'un bloc-batterie (202) connecté de façon correspondante à chaque BMU (203), et lorsque le système de stockage d'énergie (200) est dans un état de charge et que la puissance restante du bloc-batterie (202) connecté de façon correspondante à chaque BMU (203) satisfait à la première condition prédéfinie, et/ou lorsque le système de stockage d'énergie (200) est dans un état de décharge et que la puissance restante du bloc-batterie (202) connecté de façon correspondante à chaque BMU (203) satisfait à la seconde condition prédéfinie, envoyer un signal de commande à une unité de commutation (201) connectée de façon correspondante à chaque BMU (203), dans lequel le signal de commande est utilisé pour commander l'unité de commutation (201) connectée de façon correspondante à chaque BMU (203) pour effectuer le traitement de désactivation sur le bloc-batterie (202) connecté de façon correspondante à chaque BMU (203) ; et
chaque unité de commutation (201) est spécifiquement configurée pour : recevoir le signal de commande envoyé par la BMU (203) connectée de façon correspondante à chaque unité de commutation (201), et effectuer, sous commande du signal de commande, le traitement désactivé sur le bloc-batterie (202) connecté de façon correspondante à chaque unité de commutation (201),
dans lequel chacune des N unités de commutation (201) comprend un premier commutateur et un second commutateur, dans lequel
chacun des N blocs-batteries (202) est connecté en série à un premier commutateur dans une unité de commutation (201) connectée de façon correspondante à chaque bloc-batterie (202), pour obtenir un sous-circuit correspondant à chaque bloc-batterie (202), un second commutateur dans l'unité de commutation connectée de façon correspondante à chaque bloc-batterie (202) est connecté en parallèle au sous-circuit correspondant à chaque bloc-batterie (202), et chaque BMU (203) est connectée séparément à un premier commutateur et un second commutateur dans l'unité de commutation (201) connectée de façon correspondante à chaque BMU (203) ;
chaque BMU (203) est spécifiquement configurée pour : lorsque le système de stockage d'énergie (200) est dans un état de charge et que la puissance restante du bloc-batterie (202) connecté de façon correspondante à chaque BMU (203) satisfait à la première condition prédéfinie, et/ou lorsque le système de stockage d'énergie (200) est dans un état de décharge et que la puissance restante du bloc-batterie (202) connecté de façon correspondante à chaque BMU (203) satisfait à la seconde condition prédéfinie, envoyer un premier signal de commande au premier commutateur dans l'unité de commutation (201) connectée de façon correspondante à chaque BMU (203), et envoyer un second signal de commande au second commutateur dans l'unité de commutation (201) connectée de façon correspondante à chaque BMU (203), dans lequel le premier signal de commande est utilisé pour commander un commutateur à désactiver, et le second signal de commande est utilisé pour commander un commutateur à activer ;
le premier commutateur dans chaque unité de commutation (201) est configuré pour :
recevoir le premier signal de commande envoyé par la BMU (203) connectée de façon correspondante à chaque unité de commutation (201), et à désactiver sous la commande du premier signal de commande ; et
le second commutateur dans chaque unité de commutation (201) est configuré pour :
recevoir le second signal de commande envoyé par la BMU (203) connectée de façon correspondante à chaque unité de commutation (201), et à activer sous la commande du second signal de commande,
dans lequel le système de stockage d'énergie (200) comprend en outre une unité de commande de batterie, BCU (102), et la BCU (102) est connectée à chaque BMU (203), dans lequel
chaque BMU (203) est en outre configurée pour : envoyer des informations d'indication de puissance correspondant à chaque BMU (203) à la BCU (102), dans lequel les informations d'indication de puissance indiquent la puissance restante du bloc-batterie (202) connecté de façon correspondante à chaque BMU (203) ;
la BCU (102) est configurée pour : recevoir les informations d'indication de puissance envoyées par chaque BMU (203), et déterminer, sur la base des informations d'indication de puissance, si la puissance restante du bloc-batterie (202) connecté de façon correspondante à chaque BMU (203) satisfait à la première condition prédéfinie ou à la seconde condition prédéfinie, lorsque la puissance restante du bloc-batterie (202) connecté de façon correspondante à chaque BMU (203) satisfait à la première condition prédéfinie et que le système de stockage d'énergie (200) est dans un état de charge, et/ou lorsque la puissance restante du bloc-batterie (202) connecté de façon correspondante à chaque BMU (203) satisfait à la seconde condition prédéfinie et que le système de stockage d'énergie (200) est dans un état de décharge, envoyer des informations d'indication de commande à chaque BMU (203), dans lequel les informations d'indication de commande indiquent la BMU (203) pour commander l'unité de commutation (201) connectée de façon correspondante afin d'effectuer un traitement de désactivation sur le bloc-batterie connecté de façon correspondante (202) ; et
chaque BMU (203) est spécifiquement configurée pour : recevoir les informations d'indication de commande envoyées par la BCU (102), et envoyer, sur la base des informations d'indication de commande, le premier signal de commande au premier commutateur dans l'unité de commutation connectée de façon correspondante à chaque BMU (203), et envoyer le second signal de commande au second commutateur dans l'unité de commutation (201) connectée de façon correspondante à chaque BMU (203),
**caractérisé en ce que**
la BCU (102) est en outre configurée pour : déterminer, à une phase de démarrage de la BCU (102), si le système de stockage d'énergie (200) doit effectuer une charge et si le système de stockage d'énergie doit effectuer une décharge,
et lorsque le système de stockage d'énergie (200) n'a pas besoin d'effectuer une charge et n'a pas besoin d'effectuer une décharge, déterminer si une quantité S de blocs-batteries opérationnels dans les N blocs-batteries (202) est supérieure ou égale à une quantité minimale M de blocs-batteries requis pour exécuter le système de stockage d'énergie (200),
dans lequel les blocs-batteries opérationnels comprennent des blocs-batteries autres qu'un bloc-batterie à charge désactivée, un bloc-batterie à décharge désactivée et un bloc-batterie défectueux dans le système de stockage d'énergie ;
et le bloc-batterie à charge désactivée comprend un bloc-batterie dont la puissance restante est supérieure ou égale à la première valeur de puissance prédéfinie, et le bloc-batterie à décharge désactivée comprend un bloc-batterie dont la puissance restante est inférieure ou égale à la seconde valeur de puissance prédéfinie ; et
la BCU (102) est en outre configurée pour : lorsque S est supérieur ou égal à M, envoyer les informations d'indication de commande à des BMU (203) connectées de façon correspondante au bloc-batterie à charge désactivée et au bloc-batterie à décharge désactivée.

2. Système de stockage d'énergie (200) selon la revendication 1, dans lequel la BCU (102) est en outre configurée pour : déterminer, à une phase de démarrage de la BCU (102), si le système de stockage d'énergie (200) doit effectuer une charge, et lorsque le système de stockage d'énergie (200) doit effectuer une charge, envoyer les informations d'indication de commande à une BMU (203) connectée de façon correspondante à un bloc-batterie à charge désactivée dans les N blocs-batteries.

3. Système de stockage d'énergie (200) selon la revendication 1, dans lequel la BCU (103) est en outre configurée pour : déterminer, à une phase de démarrage de la BCU (103), si le système de stockage d'énergie (200) doit effectuer une décharge, et lorsque le système de stockage d'énergie (200) doit effectuer une décharge, envoyer les informations d'indication de commande à une BMU (203) connectée de façon correspondante à un bloc-batterie à décharge désactivée dans les N blocs-batteries.

4. Système de stockage d'énergie (200) selon l'une quelconque des revendications 1 à 3, dans lequel la BCU (102) est en outre configurée pour : lorsque S est inférieur à M, déterminer si une somme de S et d'une quantité N1 de blocs-batteries à charge désactivée dans le système de stockage d'énergie est supérieure ou égale à M, et lorsque la somme de S et N1 est supérieure ou égale à M, envoyer les informations d'indication de commande à la BMU connectée de façon correspondante au bloc-batterie à décharge désactivée.

5. Système de stockage d'énergie (200) selon l'une quelconque des revendications 1 à 4, dans lequel la BCU (102) est en outre configurée pour : lorsque S est inférieur à M, déterminer si une somme de S et d'une quantité N2 de blocs-batteries à décharge désactivée dans le système de stockage d'énergie est supérieure ou égale à M, et lorsque la somme de S et N2 est supérieure ou égale à M, envoyer les informations d'indication de commande à la BMU connectée de façon correspondante au bloc-batterie à charge désactivée.

6. Procédé de commande pour un système de stockage d'énergie, dans lequel le système de stockage d'énergie comprend une unité de commande de batterie, BCU, N unités de surveillance de batterie, BMU, N unités de commutation, et N blocs-batteries connectées en série, les N BMU, les N blocs-batteries et les N unités de commutation sont dans une correspondance biunivoque les uns avec les autres, N est un nombre entier supérieur à 1, et le procédé de commande comprend :
la réception (S901), par la BCU, d'informations d'indication de puissance envoyées par chaque BMU ;
la détermination (S902), par la BCU sur la base des informations d'indication de puissance, du fait que la puissance restante d'un bloc-batterie connecté de façon correspondante à chaque BMU satisfait à une première condition prédéfinie ou à une seconde condition prédéfinie ; et
lorsque (S903) la puissance restante du bloc-batterie connecté de façon correspondante à chaque MMU satisfait à la première condition prédéfinie et le système de stockage d'énergie est dans un état de charge, et/ou lorsque la puissance restante du bloc-batterie connectée de façon correspondante à chaque BMU satisfait à la seconde condition prédéfinie et que le système de stockage d'énergie est dans un état de décharge, l'envoi, par la BCU, d'informations d'indication de commande à chaque BMU, dans lequel les informations d'indication de puissance indiquent la puissance restante du bloc-batterie connectée de façon correspondante à chaque BMU, dans lequel les informations d'indication de commande indiquent la BMU pour commander une unité de commutation connectée de façon correspondante pour effectuer un traitement de désactivation sur le bloc-batterie connecté de façon correspondante, dans lequel le traitement de désactivation comprend la déconnexion d'un chemin de courant d'un bloc-batterie connecté de façon correspondante à chaque unité de commutation et le fait de garantir qu'un trajet de courant du système de stockage d'énergie est connecté,
la surveillance, par chacune des N BMU, de la puissance restante d'un bloc-batterie connecté de façon correspondante à chaque BMU, et lorsque (S904) le système de stockage d'énergie est dans un état de charge et que la puissance restante du bloc-batterie est connectée de façon correspondante à chaque BMU satisfait à la première condition prédéfinie, et/ou lorsque le système de stockage d'énergie est dans un état de décharge et que la puissance restante du bloc-batterie connectée de façon correspondante à chaque BMU satisfait à la seconde condition prédéfinie, l'envoi d'un signal de commande à une unité de commutation connectée de façon correspondante à chaque BMU, dans lequel le signal de commande est utilisé pour commander l'unité de commutation connectée de façon correspondante à chaque BMU pour effectuer le traitement de désactivation sur le bloc-batterie connecté de façon correspondante à chaque BMU ; et
la réception, par chaque unité de commutation, du signal de commande envoyé par la BMU connectée de façon correspondante à chaque unité de commutation, et la réalisation, sous la commande du signal de commande, du traitement de désactivation sur le bloc-batterie connecté de façon correspondante à chaque unité de commutation, dans lequel chacune des N unités de commutation comprend un premier commutateur et un second commutateur,
dans lequel chacun des N blocs-batteries est connecté en série à un premier commutateur dans une unité de commutation connectée de façon correspondante à chaque bloc-batterie, pour obtenir un sous-circuit correspondant à chaque bloc-batterie, un second commutateur dans l'unité de commutation connectée de façon correspondante à chaque bloc-batterie est connecté en parallèle au sous-circuit correspondant à chaque bloc-batterie, et chaque BMU est connectée séparément à un premier commutateur et un second commutateur dans l'unité de commutation connectée de façon correspondante à chaque BMU ;
lorsque le système de stockage d'énergie est dans un état de charge et que la puissance restante du bloc-batterie est connectée de façon correspondante à chaque BMU satisfait à la première condition prédéfinie, et/ou lorsque le système de stockage d'énergie est dans un état de décharge et que la puissance restante du bloc-batterie est connectée de façon correspondante à chaque BMU satisfait à la seconde condition prédéfinie, l'envoi, par chaque BMU, d'un premier signal de commande au premier commutateur dans l'unité de commutation connectée de façon correspondante à chaque BMU, et l'envoi d'un second signal de commande au second commutateur dans l'unité de commutation connectée de façon correspondante à chaque BMU, dans lequel le premier signal de commande est utilisé pour commander un commutateur à désactiver, et le second signal de commande est utilisé pour commander un commutateur à activer,
le premier commutateur dans chaque unité de commutation est configuré pour :
recevoir le premier signal de commande envoyé par la BMU connectée de façon correspondante à chaque unité de commutation, et à désactiver sous commande du premier signal de commande ; et
le second commutateur dans chaque unité de commutation est configuré pour :
recevoir le second signal de commande envoyé par la BMU connectée de façon correspondante à chaque unité de commutation, et être activé sous commande du second signal de commande,
dans lequel le système de stockage d'énergie comprend en outre une unité de commande de batterie, BCU, et la BCU est connectée à chaque BMU,
l'envoi d'informations d'indication de puissance correspondant à chaque BMU à la BCU, par chaque BMU, dans lequel les informations d'indication de puissance indiquent la puissance restante du bloc-batterie connectée de façon correspondante à chaque BMU ;
la réception des informations d'indication de puissance envoyées par chaque BMU, par la BCU, et la détermination, sur la base des informations d'indication de puissance, du fait de savoir si la puissance restante du bloc-batterie connectée de façon correspondante à chaque BMU satisfait à la première condition prédéfinie ou à la seconde condition prédéfinie, lorsque la puissance restante du bloc-batterie connectée de façon correspondante à chaque BMU satisfait à la première condition prédéfinie et que le système de stockage d'énergie est dans un état de charge, et/ou lorsque la puissance restante du bloc-batterie connectée de façon correspondante à chaque BMU satisfait à la seconde condition prédéfinie et que le système de stockage d'énergie est dans un état de décharge, l'envoi d'informations d'indication de commande à chaque BMU, dans lequel les informations d'indication de commande indiquent la BMU pour commander l'unité de commutation connectée de façon correspondante pour effectuer un traitement de désactivation sur le bloc-batterie connecté de façon correspondante ; et
la réception, par chaque BMU, des informations d'indication de commande envoyées par la BCU, et envoyer, sur la base des informations d'indication de commande, le premier signal de commande au premier commutateur dans l'unité de commutation connecté de façon correspondante à chaque BMU, et envoyer le second signal de commande au second commutateur dans l'unité de commutation connectée de façon correspondante à chaque BMU, **caractérisé en ce que**
la détermination, par la BCU, à une phase de démarrage de la BCU, du fait de savoir si le système de stockage d'énergie doit effectuer une charge et du fait de savoir si le système de stockage d'énergie doit effectuer une décharge,
et lorsque le système de stockage d'énergie n'a pas besoin d'effectuer une charge et n'a pas besoin d'effectuer une décharge, la détermination du fait de savoir si une quantité S de blocs-batteries opérationnels dans les N blocs-batteries est supérieure ou égale à une quantité minimale M de blocs-batteries requis pour exécuter le système de stockage d'énergie,
dans lequel les blocs-batteries opérationnels comprennent des blocs-batteries autres qu'un bloc-batterie à charge désactivée, un bloc-batterie à décharge désactivée et un bloc-batterie défectueux dans le système de stockage d'énergie ;
et le bloc-batterie à charge désactivée comprend un bloc-batterie dont la puissance restante est supérieure ou égale à la première valeur de puissance prédéfinie, et le bloc-batterie à décharge désactivée comprend un bloc-batterie dont la puissance restante est inférieure ou égale à la seconde valeur de puissance prédéfinie ; et
lorsque S est supérieur ou égal à M, l'envoi, par la BCU, des informations d'indication de commande à des BMU connectées de façon correspondante au bloc-batterie à charge désactivée et au bloc-batterie à décharge désactivée.

7. Procédé de commande selon la revendication 6, dans lequel le procédé comprend en outre :
la détermination (S1301), par la BCU à une phase de démarrage de la BCU, du fait de savoir si le système de stockage d'énergie doit effectuer une charge ; et
lorsque le système de stockage d'énergie doit effectuer une charge, l'envoi, par la BCU, de l'indication de commande en formation à une BMU connectée de façon correspondante à un bloc-batterie à charge désactivée dans les N blocs-batteries.

8. Procédé de commande selon la revendication 6, dans lequel le procédé comprend en outre :
la détermination (S1304), par la BCU à une phase de démarrage de la BCU, du fait de savoir si le système de stockage d'énergie doit effectuer une décharge ; et
lorsque le système de stockage d'énergie doit effectuer une décharge, l'envoi, par la BCU, des informations d'indication de commande à une BMU connectée de façon correspondante à un bloc-batterie à décharge désactivée dans les N blocs de batteries.

9. Procédé de commande selon la revendication 6, dans lequel le procédé comprend en outre :
la détermination (S1301, 1304), par la BCU à une phase de démarrage de la BCU, du fait de savoir si le système de stockage d'énergie doit effectuer une charge et si le système de stockage d'énergie doit effectuer une décharge ;
lorsque le système de stockage d'énergie n'a pas besoin d'effectuer une charge et n'a pas besoin d'effectuer une décharge, la détermination, par la BCU, du fait de savoir si une quantité S de blocs-batteries opérationnels dans les N blocs-batteries est supérieure ou égale à une quantité minimale M de blocs-batteries requis pour exécuter le système de stockage d'énergie, dans lequel les blocs-batteries opérationnels comprennent des blocs-batteries autres qu'un bloc-batterie à charge désactivée, un bloc-batterie à décharge désactivée et un bloc-batterie défectueux dans le système de stockage d'énergie ; et le bloc-batterie à charge désactivée comprend un bloc-batterie dont la puissance restante est supérieure ou égale à la première valeur de puissance prédéfinie, et le bloc-batterie à décharge désactivée comprend un bloc-batterie dont la puissance restante est inférieure ou égale à la seconde valeur de puissance prédéfinie ; et
lorsque S est supérieur ou égal à M, l'envoi, par la BCU, des informations d'indication de commande à des BMU connectées de façon correspondante au bloc-batterie à charge désactivée et au bloc-batterie à décharge désactivée.

10. Procédé de commande selon la revendication 9, dans lequel le procédé comprend en outre :
lorsque S est inférieur à M, la détermination, par la BCU, du fait de savoir si une somme de S et d'une quantité N1 de blocs-batteries à charge désactivée dans le système de stockage d'énergie est supérieure ou égale à M ; et
lorsque la somme de S et de N1 est supérieure ou égale à M, l'envoi, par la BCU, des informations d'indication de commande au BMU connecté de façon correspondante au bloc-batterie à décharge désactivée.

11. Procédé de commande selon la revendication 9, dans lequel le procédé comprend en outre :
lorsque S est inférieur à M, la détermination, par la BCU, du fait de savoir si une somme de S et d'une quantité N2 de blocs-batteries à décharge désactivée par dans le système de stockage d'énergie est supérieure ou égale à M ; et
lorsque la somme de S et N2 est supérieure ou égale à M, l'envoi, par la BCU, des informations d'indication de commande à la BMU connectée de façon correspondante au bloc-batterie à charge désactivée.
